Europäisches Patentamt

European Patent Office

Office européen des brevets

(11) Veröffentlichungsnummer: **0 443 066 B1**

(12) **EUROPÄISCHE PATENTSCHRIFT**

(45) Veröffentlichungstag der Patentschrift: **12.01.94**

(21) Anmeldenummer: **90103400.9**

(22) Anmeldetag: **22.02.90**

(51) Int. Cl.⁵: **B60T 8/32**, B60T 8/42

(54) **Antiblockierregelsystem für hydraulische Kraftfahrzeug-Bremsanlagen.**

(43) Veröffentlichungstag der Anmeldung:
**28.08.91 Patentblatt 91/35**

(45) Bekanntmachung des Hinweises auf die
Patenterteilung:
**12.01.94 Patentblatt 94/02**

(84) Benannte Vertragsstaaten:
**DE ES FR GB IT**

(56) Entgegenhaltungen:
EP-A- 0 252 595       DE-A- 3 812 831
DE-A- 3 838 389       DE-A- 3 841 718
FR-A- 2 171 191       FR-A- 2 232 471

(73) Patentinhaber: **V O L K S W A G E N Aktiengesellschaft**

**D-38436 Wolfsburg(DE)**

(72) Erfinder: **Schulze, Bernd-Guido, Dipl.-Ing.
Menzelstrasse 2
D-3180 Wolfsburg 12(DE)**
Erfinder: **Andreas, Peter, Dipl.-Ing.
Erlenkamp 9
D-3170 Gifhorn(DE)**

EP 0 443 066 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.9/3.3.3)

## Beschreibung

Die Erfindung bezieht sich auf ein Antiblockierregelsystem für hydraulische Kraftfahrzeug-Bremsanlagen der im Oberbegriff des Patentanspruchs 1 genannte Art, wie es beispielsweise aus der EP-A-0 252 595 bekannt ist.

Gebremste Fahrzeugräder sind generell immer dann blockiergefährdet, wenn an ihnen infolge zu hoher aufgebrachter Bremsdrücke Bremskräfte wirksam werden, die größer sind als die bei maximalem Reibwert zwischen ihren Reifen und der Fahrbahn möglichen Kontaktkräfte.

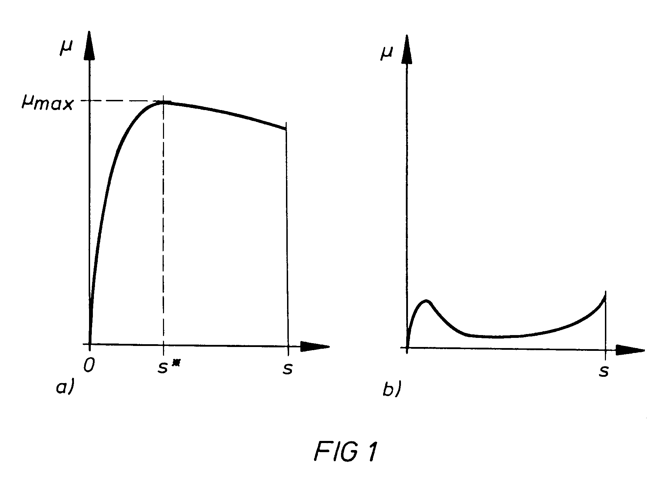

In Fig. 1 sind stark vereinfacht zwei mögliche Zusammenhänge zwischen dem Reibwert $\mu$ (Reibungszahl, Reibbeiwert) und dem Schlupf s eines Fahrzeugrades dargestellt, wobei sich der Radschlupf als auf die Fahrzeuggeschwindigkeit bezogene Differenz zwischen Fahrzeuggeschwindigkeit und Raddrehgeschwindigkeit errechnet

$$s = \frac{v_F - v_R}{v_F} \ .$$

Bei normalen Straßenverhältnissen liegen die in a) prinzipienhaft dargestellten Reibwert/Schlupf-Abhängigkeiten vor. Der maximale Reibwert $\mu_{max}$ ist einem bestimmten Schlupfwert s* zugeordnet. Im Bereich unterhalb des zum maximalen Reibwert $\mu_{max}$ gehörenden Schlupf s*, d. h. im Bereich zwischen dem Schlupf 0 und dem Schlupf s* führt eine Steigerung des dem Radbremszylinder zugeführten Bremsdrucks, d. h. eine Steigerung der an diesem Rad zur Wirkung gebrachten Bremskraft bzw. des Bremsmomentes jeweils zu einer höheren Reibwertausnutzung und zu einem höheren Schlupfwert. Wird der Bremsdruck innerhalb dieses Bereiches konstant gehalten, dann stellt sich somit ein bestimmtes Verhältnis zwischen Reibwertausnutzung und Schlupf stabil ein. Ein Konstanthalten des Bremsdrucks bzw. der Bremskraft oder des Bremsmoments bei Schlupfwerten, die größer sind als der zum maximalen Reibwert $\mu_{max}$ gehörende Schlupf, führt dagegen zwangsläufig zu einem "Absturz", d. h. zu einem schnellen Blockieren des Fahrzeugrades, da die Reibwertausnutzung mit größer werdendem Schlupf sinkt und das Rad keinen stabilen Arbeitspunkt mehr findet.

Etwas andere Verhältnisse liegen bei dem in b) dargestellten Sonderfall vor, wo sich nach einem instabilen Gebiet jenseits des maximalen Schlupfes $\mu_{max}$ noch ein zweites stabiles Gebiet anschließt, welches mitunter sogar Reibwerte besetzt, die größer sind als der maximale Reibwert $\mu_{max}$ des ersten stabilen Gebietes. Derartige Reibwert/Schlupf-Abhängigkeiten bestehen beispielsweise bei Neuschnee oder Neuschnee vergleichbaren losen Sanden.

Es ist leicht erkennbar, daß sich eine maximale Abbremsung des Kraftfahrzeuges ergeben würde, wenn es gelänge, alle vier Fahrzeugräder immer mit dem maximalen Reibwert $\mu_{max}$ der Reibwert-Schlupf-Kurve abzubremsen, was in der Praxis jedoch nicht realisierbar ist. Aus Gründen der Fahrstabilität ist es auch nicht wünschenswert, alle vier Fahrzeugräder im Bereich des maximalen Reibwertes $\mu_{max}$ zu betreiben, da die Hinterräder aus Stabilitätsgründen eine größere Seitenkraftreserve benötigen als die Vorderräder, was bekanntlich zu Lasten der Reibwertausnutzung geht. Deshalb ist es allgemein üblich, die Hinterräder eines Kraftfahrzeuges im zeitlichen Mittelwert auf kleinere Schlupfwerte zu regeln als die Vorderräder.

Um sicherzustellen, daß ein Kraftfahrzeug selbst bei voller Betätigung der Betriebsbremsanlage einerseits möglichst kurze Anhalte- bzw. Bremswege besitzt und andererseits seine Richtungsstabilität und Lenkfähigkeit beibehält, ist es üblich, hydraulische Kraftfahrzeug-Bremsanlagen mit einem Antiblockierregelsystem zu versehen, welches ein Blockieren der gebremsten Räder verhindert.

Ein Antiblockierregelsystem besteht im allgemeinen im wesentlichen aus einer oder mehreren Sensoreinrichtungen zur Erfassung von Betriebsparametern des Kraftfahrzeuges, insbesondere zur Erfassung des Bewegungszustandes bzw. des Drehverhaltens zumindest der bremsschlupfregelbaren Fahrzeugräder, aus einer elektronischen Steuer- und Regeleinrichtung bzw. einer Auswerte- und Regelelektronik zur Feststellung des Blockierens oder der Blockiergefährdung eines oder mehrerer Fahrzeugräder und zur Erzeugung geeigneter Steuer- und Regelsignale, sowie aus in den zu den Radbremsen führenden Hydraulikleitungen der hydraulischen Bremsanlage angeordneten, von der Auswerte- und Regelelektronik gesteuerten Einrichtungen zur von der Betätigung des Bremspedals unabhängigen steuerbaren Veränderung des Hydraulikdrucks (Bremsdrucks) der blockierenden bzw. blockiergefährdeten Fahrzeugräder.

Als Einrichtungen zur von der Betätigung des Bremspedals unabhängigen steuerbaren Veränderung des Hydraulikdrucks, d. h. zur Modulation des Bremsdrucks der blockierenden bzw. blockiergefährdeten Fahrzeugräder sind sowohl unstetig arbeitende Modulationseinrichtungen als auch stetig arbeitende Modulationseinrichtungen bekannt. Beide Modulationseinrichtungstypen ermöglichen es, den Hydraulikdruck der Radbremszylinder von jeweils als blockiergefährdet erkannten Fahrzeugrädern zunächst schnellstmöglich auf einen die Blokkierneigung beseitigenden Druckwert abzusenken und anschließend nach Maßgabe von in der elektronischen Steuer- und Regeleinrichtung installierter bzw. gespeicherter Regelkriterien wieder zu erhöhen.

Stetig arbeitende Bremsdruckmodulatoren sind i. a. als Bremsdruckreduzierzylinder ausgebildet, deren Modulatorkolben (Plunger) zwischen zwei Endstellung - vorzugsweise mittels elektrischer Stellantriebe - axial verschiebbar sind, wodurch das wirksame Zylindervolumen der in dem zu den Radbremszylindern der bremsschlupfregelbaren Fahrzeugräder führenden Hydraulikleitungen zwischengeschalteten Bremsdruckreduzierzylinder gezielt zwischen einem Minimalwert und einem Maximalwert verändert werden kann, um dadurch den im zugeordneten Radbremszylinder wirksamen Bremsendruck zu modulieren, d. h. den jeweiligen Regelerfordernissen der Antiblockierregelung entsprechend zu verringern (Vergrößerung des wirksamen Zylindervolumens) und wieder zu erhöhen (Verringerung des zuvor vergrößerten Zylindervolumens). Derartige Bremsdruckmodulatoren sind z. B. aus der DE-A-35 30 286, DE-A-36 08 573 oder der EP-A-0 252 595 bekannt.

Im allgemeinen ist dabei eingangs dieser Bremsdruckmodulatoren jeweils ein mechanisch vom Modulatorkolben betätigbares Sperrventil (sogenanntes Kopfventil) angeordnet, durch welches das mit den zugeordneten Radbremszylindern der bremsschlupfregelbaren Fahrzeugräder ständig in Verbindung stehende Zylindervolumen des Bremsdruckreduzierzylinders bei Eintritt der Antiblockierregelung von der übrigen Bremsanlage, d. h. insbesondere vom Hauptbremszylinder, hydraulisch abgetrennt wird.

Auch bei der vorliegenden Erfindung wird die Modulation des Bremsdrucks der als blockiergefährdet erkannten Fahrzeugräder, d. h. das Verringern sowie das spätere wieder Vergrößern des Bremsdrucks mit Hilfe von solchen stetig arbeitenden Bremsdruckmodulatoren durchgeführt, vorzugsweise mittels als Bremsdruckreduzierzylinder ausgebildeten stetig arbeitenden Bremsdruckmodulatoren.

Bei herkömmlichen Antiblockierregelsystemen wird der Bremsdruck des betreffenden Rades nach der seinem "Absturz", d. h. seinem Blockieren folgenden Hydraulikdruckabsenkung üblicherweise nach Art einer Zweipunktregelung wiederholt wieder so weit erhöht, bis erneut ein Blockieren des Rades auftritt. Hierbei wird also zwangsläufig mit einem im zeitlichen Mittel vergleichsweise deutlich unter dem maximalen Reibwert $\mu_{max}$ liegenden Reibwert gearbeitet, was auf das vergleichsweise hochfrequente ständige Druckabsenken zurückzuführen ist.

Z. B. aus der EP-A-0 252 595 und der FR-A-2 171 191 sind aber auch bereits Antiblockierregelsystem bekannt, bei denen der Bremsdruck nach Hydraulikdruckabsenkung auf einen Wert, bei dem die Fahrzeugräder gerade wieder zu Beschleunigen beginnen, unmittelbar wieder auf einen auf der Basis von zuvor gespeicherten Bremsdruckwerten ermittelten Wert erhöht wird, bei dem - sofern sich die Fahrbahnverhältnisse zwischenzeitlich nicht verändert haben - das abgebremste Fahrzeugrad gerade noch nicht blockiert. Die Abbremsung des betroffenen Fahrzeugrades wird hier also nach der seinem "Absturz" folgenden Hydraulikdruckabsenkung wieder direkt in den Bereich des Haftreibbeiwertes, d. h. des maximalen Reibwertes $\mu_{max}$ der bekannten Reibwert/Schlupf-Kurve gesteuert, so daß die Abbremsung dieses Rades im Vergleich zu konventionellen Systemen letztlich jeweils nur kurzfristig mit niedrigerem Reibwert $\mu$ erfolgt.

Diesen auf während des Betriebs abgespeicherte Bremsdrücke zurückgreifenden bekannten Antiblockierregelsystemen liegen im wesentlichen zwei Erkenntnisse zugrunde:

1. Kurz vor seinem "Absturz" wurde das gebremste Rad mit seinem optimalen Schlupfwert, d. h. dem dem maximalen Reibwert $\mu_{max}$ entsprechenden Schlupfwert betrieben; bei der dann gerade vorliegenden momentanen Geschwindigkeit des Fahrzeugs liegt bei diesem optimalen Schlupfwert also gerade die "ideale Raddrehgeschwindigkeit" vor, d. h. die Raddrehgeschwindigkeit, bei der dieses Rad seinen maximal möglichen Beitrag zur Fahrzeugabbremsung leisten kann.

2. Kurz vor dem "Absturz" des Fahrzeugrades ist am Rad das bestmögliche Bremsmoment bzw. die bestmögliche Bremskraft wirksam, d. h. der im Radbremszylinder dieses Rades herrschende Bremsdruck besitzt gerade seinen bestmöglichen Wert, d. h. den Wert, mit dem ein maximaler Beitrag zur Fahrzeugabbremsung geleistet werden kann; wäre der Bremsdruck nicht über diesen Wert hinaus erhöht worden, wäre dieses Rad optimal abgebremst und nicht überbremst worden, d. h. es wäre nicht abgestürzt".

Bei diesen bekannten Antiblockierregelsystemen wird kontinuierlich unmittelbar der den Radbremszylindern zugeführte Hydraulikdruck gemessen und der bei Blockierbeginn herrschende Blockierdruck für die anschließende Aussteuerung der Bremsdruckmodulatoren abgespeichert.

Den im Radbremszylinder eines Rades herrschenden Hydraulikdruck (Bremsdruck) oder die am gebremsten Fahrzeugrad wirksamen Bremskräfte und -momente kontinuierlich zu messen und zu speichern, ist meßtechnisch recht aufwendig und letztlich auch teuer.

Vor diesem Hintergrund liegt der Erfindung die Aufgabe zugrunde, ein Antiblockierregelsystem für hydraulische Kraftfahrzeug-Bremsanlagen der im Oberbegriff des Patentanspruchs 1 genannten Art funktionell weiter zu verbessern und insbesondere so zu konzipieren, daß eine meßtechnisch aufwendige kontinuierliche Messung des in den Radbremszylindern herrschenden Hydraulikdrucks (Bremsdrucks) oder der an den gebremsten Fahrzeugrädern wirksamen Bremskräfte und -momente nicht zwingend erforderlich ist, sondern daß statt dessen auf im Prinzip einfach erfaßbare Betriebsdaten der eingesetzten stetig arbeitenden Bremsdruckmodulatoren zurückgegriffen werden kann.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Erfindungsgemäß werden also die stetig arbeitenden Bremsdruckmodulatoren von als blockiergefährdet erkannten Fahrzeugrädern in der eigentlichen Antiblockier-Regelphase jeweils zunächst derart gesteuert bzw. geregelt, daß der Hydraulikdruck (Bremsdruck) des als blockiergefährdet erkannten Fahrzeugrades schnellstmöglich, aber nur so weit absinkt, bis die Raddrehverzögerung, d. h. die negative Raddrehbeschleunigung, wieder auf einen der Fahrzeugverzögerung entsprechenden Wert abgesunken ist, nicht jedoch wie sonst üblich so lange, bis das Rad wieder beschleunigt. Auf diese Weise werden die am gebremsten Fahrzeugrad angreifenden Bremskräfte bzw. -momente nur so lange reduziert, bis gerade ein Momentengleichgewicht zwischen dem von der Fahrbahn auf das Rad wirkenden Rückantriebsmoment und dem bremsdruckbedingten Bremsmoment vorliegt; jede weitere Bremsdruckabsenkung bzw. jede weitere Reduzierung des Bremsmomentes würde zu einer unnötigen Unterbremsung und damit zu einer Verschlechterung des im zeitlich Mittel ausgenutzten Reibwertes führen.
Erfindungsgemäß werden die Bremsdruckmodulatoren in dieser Regelphase anschließend derart gesteuert bzw. geregelt, daß der Hydraulikdruck zunächst so lange zumindest annähernd diesen abgesenkten Wert beibehält, bis das zugeordnete Fahrzeugrad wieder auf eine Raddrehgeschwindigkeit beschleunigt hat, die zumindest annähernd einer aus der Fahrzeugverzögerung ermittelten idealen Raddrehgeschwindigkeit (Raddrehgeschwindigkeits-Sollwert) entspricht.
Erst danach werden die Bremsdruckmodulatoren in dieser Regelphase in einen Aussteuerungszustand überführt, welcher zumindest annähernd ihrem kurz vor dem Erkennen der erneuten Blockiergefährdung eingenommenen und in den Speichereinheiten der elektronischen Steuer- und Regeleinrichtung abgespeicherten Aussteuerungszustand entspricht.
Erfindungsgemäß ist des weiteren dieser eigentlichen Antiblockier-Regelphase eine besondere Anbrems- und Suchphase vorgeschaltet, in der die stetig arbeitenden Bremsdruckmodulatoren jeweils derart gesteuert bzw. geregelt werden, daß der Hydraulikdruck (Bremsdruck) ebenfalls zunächst schnellstmöglich, aber nur so weit absinkt, bis die Raddrehverzögerung (negative Raddrehbeschleunigung) wieder einen der Fahrzeugverzögerung entsprechenden Wert aufweist, daß anschließend der Hydraulikdruck so lange zumindest annähernd diesen abgesenkten Wert beibehält, bis das zugeordnete Fahrzeugrad wieder auf eine Raddrehgeschwindigkeit beschleunigt hat, die zumindest annähernd einer aus der Fahrzeugverzögerung ermittelten idealen Raddrehgeschwindigkeit (Raddrehgeschwindigkeits-Sollwert) entspricht und daß der Hydraulikdruck danach wieder vergleichsweise schnell so weit erhöht wird, bis dieses Fahrzeugrad von der elektronischen Steuer- und Regeleinrichtung erneut als blockiergefährdet erkannt ist.

Diese vorgeschaltete Anbrems- und Suchphase wird für die betroffenen Bremsdruckmodulatoren eingeleitet, sowie die elektronische Steuer- und Regeleinrichtung erstmalig eine Blockiergefährdung, d. h. einen "Absturz" bzw. einen signifikanten Raddrehgeschwindigkeitseinbruch der zugeordneten Fahrzeugräder erfaßt hat.

Mit dieser vorgeschalteten Anbrems- und Suchphase wird das Problem berücksichtigt, daß die in einer Antiblockierregelanlage eingesetzten stetig arbeitenden Bremsdruckmodulatoren während des normalen Fahrbetriebs völlig inaktiv sind und jeweils erst dann aktiviert werden, wenn der Antiblockierregelfall eintritt, d. h. wenn mindestens eines der bremsschlupfregelbaren Fahrzeugräder erstmalig zu Blockieren beginnt bzw. von der elektronischen Steuer- und Regeleinrichtung als blockiergefährdet erkannt wird. Erst von diesem Moment an stehen den Bremsmomenten, Bremskräften bzw. Bremsdrücken zumindest stationär proportionale Daten über den Aussteuerungszustand der Bremsdruckmodulatoren zur Verfügung, die nach Speicherung in den daran anschließenden Regelphasen etc. dann zur Steuerung und Regelung zur Verfügung stehen.

Bei Bremsdruckmodulatoren, deren Modulatorausgangsdruck der steuernden Modulatoreingangsgröße - zumindest stationär - jeweils proportional ist, kann vorzugsweise die Modulatoreingangsgröße des Bremsdruckmodulators als Maß für die Aussteuerung des Bremsdruckmodulators erfaßt und in den Speichereinheiten der elektronischen Steuer- und Regeleinrichtung gespeichert werden. Mit Vorteil können insbesondere als Bremsdruckreduzierzylinder ausgebildete Bremsdruckmodulatoren der z. B. aus den DE-A-35 30 286 und DE-A-36 08 573 bekannten Art mit mittels elektrischer Stellantriebe zwischen zwei Endstellungen axial verschiebbaren Modulatorkolben (Plunger) eingesetzt werden. Als Maß für den Aussteuerungszustand des Bremsdruckmodulators kann dabei in einfacher Weise der elektrische Steuerstrom des elektrischen Stellantriebs des Modulatorkolbens Verwendung finden, also z. B. der Motorstrom eines den Modulatorkolben direkt oder unter Zwischenschaltung eines Getriebes antreibenden Elektromotors oder der Kupplungsstrom, falls - wie in den DE-A-35 30 286, DE-A-36 08 573 - das Motormoment eines Elektromotors unter Zwischenschaltung einer elektromagnetischen Kupplung auf den Modulatorkolben übertragen wird.

Regelungstechnisch einfacher ist es jedoch, jeweils die Lage bzw. den Weg des Modulatorkolbens (Plungers) als Maß für die Aussteuerung des Bremsdruckmodulators zu erfassen und zu speichern und für die gezielte Aussteuerung des Bremsdruckmodulators zu verwenden.

Man erkennt, daß am Ende dieser Anbrems- und Suchphase mit dem dann vorliegenden Aussteuerungszustand des Bremsdruckmodulators, insbesondere mit dessen Modulatoreingangsgröße (z. B. Kupplungsstrom) oder mit dessen Modulatorkolbenlage ein Betriebsparameter der hydraulischen Bremsanlage zur Verfügung steht, welcher dem am Ende der Anbrems- und Suchphase, d. h. unmittelbar vor dem erfaßten erneuten "Radabsturz" wirksamen quasi optimalen Bremsmoment bzw. Bremsdruck proportional ist. Dieser Aussteuerungszustand des betreffenden Bremsdruckmodulators wird also erfaßt und in den Speichereinheiten der elektronischen Steuer- und Regeleinrichtung gespeichert und in der anschließenden Regelphase für die gezielte Aussteuerung des betreffenden Bremsdruckmodulators verwendet.

Die Regelphase wird initialisiert bzw. gestartet, sowie Ende der Anbrems- und Suchphase die erneute Blockiergefährdung des Fahrzeugrades erkannt wird. Der Bremsdruckmodulator wird daraufhin derart gesteuert bzw. geregelt, daß der Hydraulikdruck (Bremsdruck) des erneut als blockiergefährdet erkannten Fahrzeugrades wiederum zunächst schnellstmöglich so weit abgesenkt wird, bis die Raddrehverzögerung wieder einen der dann vorliegenden Fahrzeugverzögerung entsprechenden Wert aufweist, und anschließend solange zumindest annähernd diesen Druckwert beibehält, bis das zugeordnete Fahrzeugrad auf eine Raddrehgeschwindigkeit beschleunigt hat, die zumindest annähernd einer aus der Fahrzeugverzögerung ermittelten idealen Raddrehgeschwindigkeit (Raddrehgeschwindigkeits-Sollwert) entspricht. Anschließend werden die Bremsdruckmodulatoren in einen Aussteuerungszustand überführt, welcher zumindest annähernd ihrem Ende der Anbrems- und Suchphase unmittelbar vor dem Erkennen der erneuten Blockiergefährdung eingenommenen und dann in den Speichereinheiten der elektronischen Steuer- und Regeleinrichtung abgespeicherten Aussteuerungszustand entspricht. Je nachdem, ob die Steuerung bzw. Regelung des Bremsdruckmodulators als Lage- bzw. Wegsteuerung bzw. -regelung oder als Modulatoreingangsgrößensteuerung bzw. -regelung durchgeführt wird, steuert die elektronische Steuer- und Regeleinrichtung also entweder den Modulatorkolben unmittelbar auf die Ende der Anbrems- und Suchphase erfaßte und gespeicherte Modulatorkolbenlage oder aber die Modulatoreingangsgröße (z. B. Kupplungsstrom) auf die Ende der Anbrems- und Suchphase erfaßte und gespeicherte Modulatoreingangsgröße.

Mit Vorteil werden die Bremsdruckmodulatoren von als blockiergefährdet erkannten Fahrzeugrädern in einer der Regelphase nachfolgenden Wiederbelastungsphase anschließend jeweils solange stetig und langsam im Sinne einer Erhöhung des im Radbremszylinder des jeweils zugeordneten Fahrzeugrades wirksamen Hydraulikdrucks gesteuert bzw. geregelt, bis diese Fahrzeugräder von der elektronischen Steuer- und Regeleinrichtung erneut als blockiergefährdet erkannt sind. So werden diese Bremsdruckmodulatoren bis zum Ende des Antiblockierregelzyklus' mit Vorteil unter ständiger Aktualisierung der in den Speichereinheiten der elektronischen Steuer- und Regeleinrichtung gespeicherten Werte, also z. B. der Modulatoreingangsgrößen oder der Modulatorkolbenlage alternierend entsprechend der Regel- und der Wiederbelastungsphase gesteuert bzw. geregelt.

Auf diese Weise wird während des Antiblockierregelzyklus' eine optimale Abbremsung der Fahrzeugräder erzielt, weil im zeitlichen Mittel mit einem vergleichsweise hohen Reibwert $\mu$ gearbeitet wird.

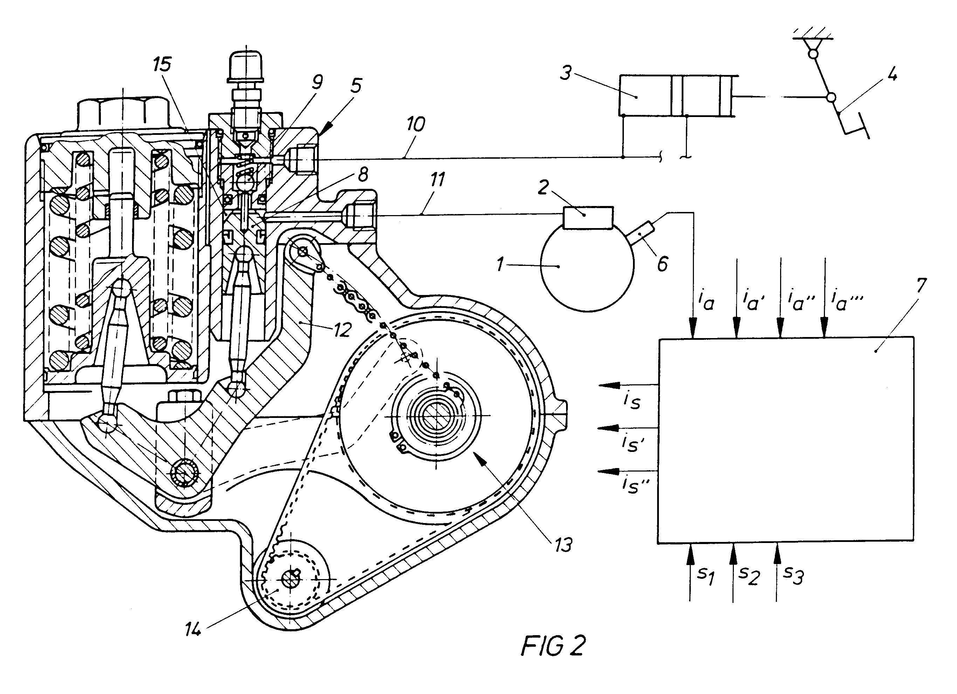

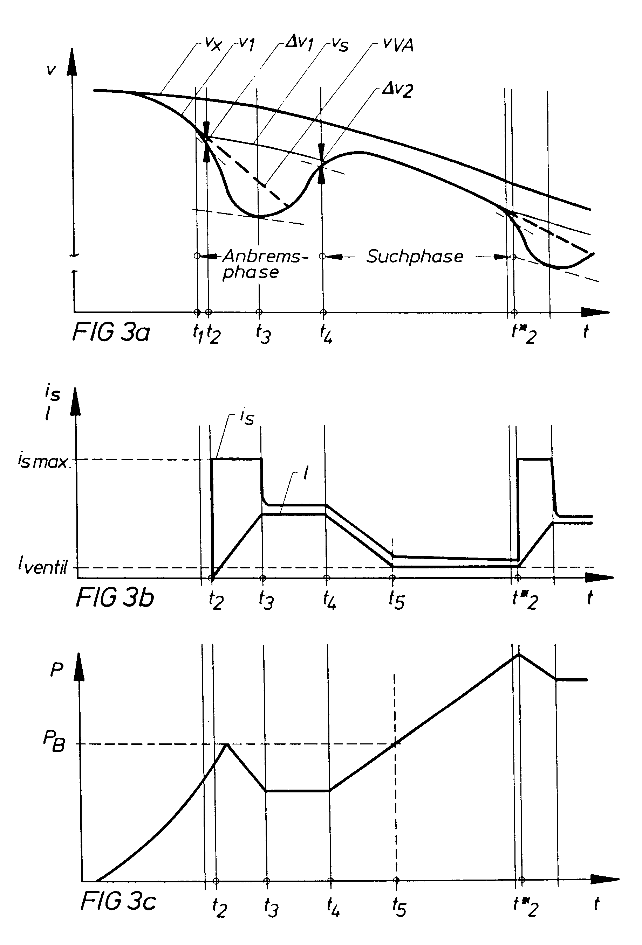

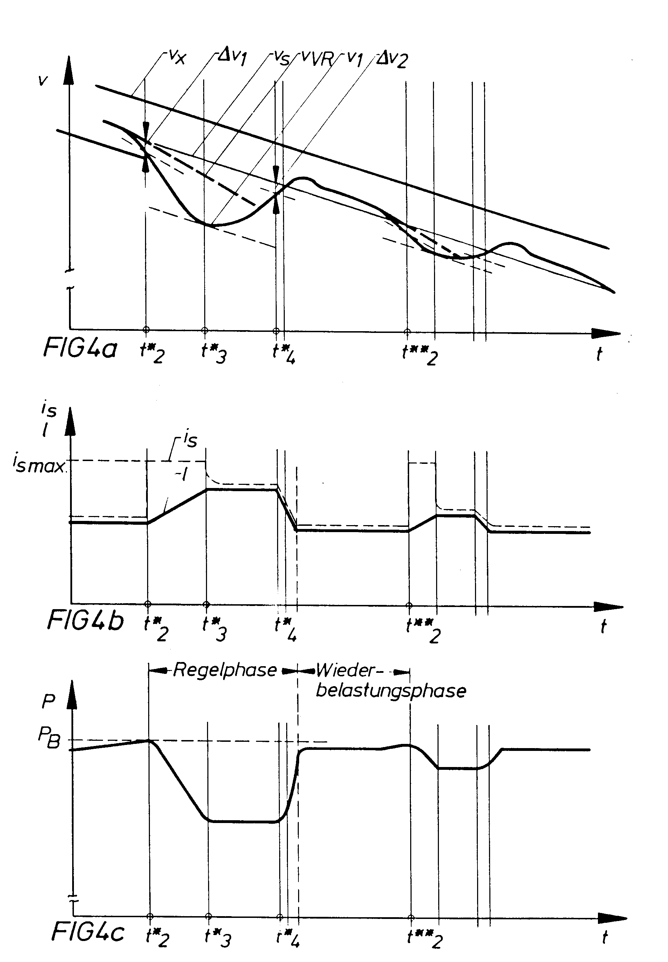

In den Figuren 3a bis 3c und 4a bis 4c ist für einen Antiblockierregelzyklus eines der Fahrzeugräder prinzipienhaft der zeitliche Verlauf einiger für die Erfindung und deren Verständnis wesentlicher Betriebs- und Steuer- bzw. Regelgrößen des Fahrzeugs bzw. dieses Rades dargestellt, wobei ein als Bremsdruckreduzierzylinder ausgebildeter Bremsdruckmodulator der in Fig. 2 dargestellten Art mit durch die elektronische Steuer- und Regeleinrichtung lage- bzw. weggesteuertem bzw. -geregeltem Modulatorkolben (Plunger) angenommen wurde.

Fig. 2 zeigt prinzipienhaft eine hydraulische Kraftfahrzeug-Bremsanlage mit Antiblockierregelsystem, wobei lediglich der eines der bremsschlupfregelbaren Fahrzeugräder 1, z. B. eines der Vorderräder enthaltende Teil der Bremsanlage dargestellt ist.

Die hydraulische Bremsanlage enthält in üblicher Weise einen durch ein Bremspedal 4 beaufschlagten Zweikreis-Hauptbremszylinder 3, i. a. mit zugeordnetem Bremskraftverstärker, dessen Ausgänge über Hydraulikleitungen 10, 11 etc. mit den Radbremszylindern der Bremsen 2 der Fahrzeugräder 1 in Verbindung stehen.

Im Zuge der zu den bremsschlupfregelbaren Fahrzeugrädern führenden Hydraulikleitungen ist jeweils ein stetig arbeitender Bremsdruckmodulator 5 zwischengeschaltet, welcher durch eine elektronische Steuer- und Regeleinrichtung 7 in Abhängigkeit Von Betriebsparametern des Kraftfahrzeugs, insbesondere in Abhängigkeit vom Drehverhalten zumindest der bremschlupfregelbaren Fahrzeuräder 1 sowie nach Maßgabe festgelegter Regelkriterien gesteuert bzw. geregelt wird. Der elektronischen Steuer- und Regeleinrichtung werden zu diesem Zweck Ausgangssignale von Sensoreinrichtungen zur Erfassung der verschiedenen Betriebsparameter des Kraftfahrzeugs zugeführt, z. B. die Ausgangssignale $i_a$ bis $i'''_a$ von Sensoreinrichtungen 6 zur Erfassung des Drehverhaltens der Fahrzeugräder 1.

Im Ausführungsbeispiel ist ein Bremsdruckmodulator in Form eines z. B. aus den DE-OS 35 30 286 bzw. 36 08 573 bekannten Bremsdruckreduzierzylinders dargestellt, dessen Modulatorkolben (Plunger) 8 mittels eines elektrischen Stellantriebes zwischen zwei Endstellungen axial verschoben werden kann, wodurch der im Radbremszylinder des zugeordneten Fahrzeugrades 1 wirksame Bremsdruck zwischen einem durch die Aussteuerung des Hauptbremszylinders 3 bestimmten Höchstwert und einem Niedrigstwert gesteuert bzw. geregelt werden kann, wobei der Höchstwert wirksam ist, wenn der Modulatorkolben 8 - u. a. z. B. bei inaktivem Bremsdruckmodulator - seine im Ausführungsbeispiel dargestellte Ruhelage einnimmt. Eine Reduzierung bzw. Absenkung des wirksamen Bremsdrucks im Radbremszylinder dieses Rades - unter den vom Hauptbremszylinder 3 an sich abgegebenen Hydraulikdruck - findet statt, wenn der Modulatorkolben 8 vom elektrischen Stellantrieb über das Hebelwerk 12 aus seiner dargestellten Ruhelage nach unten axial verschoben wird. Dabei wird nämlich zum einen ein eingangs des Bremsdruckmodulators angeordnetes und während der Ruhelage des Modulatorkolbens 8 von seinem Ventilsitz abgehobenes Sperrventil (Kopfventil) 9 geschlossen und zum anderen das wirksame Zylindervolumen des Modulatorraums 15 vergrößert. Durch das Schließen des Sperrventils 9 wird der den Radbremszylinder des zugeordneten Rades 1 enthaltende Teil der Bremsanlage druckmäßig von der Hydraulikleitung 10 und damit vom Hauptbremszylinder 3 abgetrennt; durch die Vergrößerung des Zylindervolumens des Modulatorraums 15 wird dagegen das Volumen des den relevanten Radbremszylinder enthaltenden Teils der Bremsanlage vergrößert und damit der dort wirksame Hydraulikdruck (Bremsdruck) unter den zuvor vom Hauptbremszylinder 3 eingesteuerten Druck abgesenkt, wobei die Größe der Druckabsenkung von der axialen Verschiebung und der damit verbundenen Volumenvergrößerung des Modulatorraums 15 abhängt. Ein anschließendes axiales Zurückschieben des Modulatorkolbens 8 in Richtung Ruhelage führt durch die damit verbundene Verringerung des wirksamen Zylindervolumens des Modulatorraums 15 wieder zu einem entsprechend höheren wirksamen Bremsdruck.

Im dargestellten Ausführungsbeispiel wird der Modulatorkolben 8 in aus der DE-OS 36 08 573 bekannten Weise unter Zwischenschaltung des Hebelwerks 12 und einer steuer- bzw. regelbaren elektromagnetischen Kupplung 13 von einem Elektromotor angetrieben, dessen Antriebswelle mit 14 beziffert ist. Statt dessen könnten natürlich auch andere bekannte elektrische Stellantriebe eingesetzt werden.

Die von der elektronischen Steuer- und Regeleinrichtung 7 abgegebenen Steuer- und Regelsignale für die stetig arbeitenden Bremsdruckmodulatoren der hydraulischen Bremsanlage, d. h. für deren elektrischen Stellantrieb, also z. B. deren elektromagnetische Kupplung, sind mit $i_s$ bis $i''_s$ angedeutet, wobei von einem Antiblockierregelsystem mit drei bremsdruckmodulierbaren Kreisen ausgegangen wurde, von denen in Fig. 2 jedoch nur einer dargestellt ist. Angedeutet ist, daß der elektronischen Steuer- und Regeleinrichtung i. a. noch Ausgangssignale weiterer Sensoreinrichtungen zugeführt werden, z. B. Ausgangssignale $s_1$ bis $s_3$ von nicht weiter dargestellten Sensoreinrichtungen (Istwertaufnehmern), welche - im Rahmen einer hier angenommenen Lage- bzw. Wegsteuerung bzw. -regelung der jeweiligen Modulatorkolbenlage der Bremsdruckmodulatoren 5 proportional (Istwerte) sind.

Schaltungstechnische Einzelheiten der elektronischen Steuer- und Regeleinrichtung selbst sind nicht weiter dargestellt, da diese vom Fachmann unter Einsatz bekannter elektronischer Regel- und Logikbausteine oder programmierbarer Mikroprozessoren etc. in vielfältigen Variationen realisiert werden können.

In den Figuren 3a bis 3 c ist ein zeitlicher Ausschnitt eines Antiblockierregelzyklus' eines der Fahrzeugräder, und zwar der Beginn der Antiblokkierregelung (Regelbremsung), d. h. die sogenannte Anbrems- und Suchphase prinzipienhaft dargestellt, wobei in Fig. 3a die Geschwindigkeit, in Fig. 3b der Kolbenweg und in Fig. 3c der im Radbremszylinder des abgebremsten geregelten Fahrzeugrades herrschende Hydraulikdruck (Bremsdruck) jeweils als Funktion der Zeit dargestellt sind.

In Fig. 3a zeigt der dick ausgezogene Kurvenverlauf $v_1$ den zeitlichen Verlauf der Raddrehgeschwindigkeit des abgebremsten Fahrzeugrades 1 und die dick ausgezogene Kurve $v_x$ eine tiefpaßgefilterte Maximaldrehzahlkurve. Diese stellt die Hüllkurve der jeweils größten momentanen Amplituden der durch die Sensoreinrichtungen erfaßten Raddrehgeschwindigkeiten aller vier Fahrzeugräder dar.

Es ist leicht erkennbar, daß der Momentanwert dieser Hüllkurve aufgrund ihres Bildungsgesetzes niemals kleiner sein kann als der Augenblickswert der jeweiligen größten Raddrehgeschwindigkeit und daß die Hüllkurve selbst sich maximal nur mit Gradienten verändern kann, die von der jeweiligen Fahrzeugverzögerung abhängen, wobei natürlich vorausgesetzt ist, daß nicht alle Fahrzeugräder gleichzeitig blockieren. Diese "Momentanamplituden-Hüllkurve" entspricht in ihrem Verlauf also sehr gut der Fahrzeuggeschwindigkeit, nicht jedoch unbedingt auch hinsichtlich ihrer absoluten Größe, da sie z. B. aufgrund eines dem Drehzahlsignal eines Rades überlagerten Störsignals u. ä. einen nicht vorhersehbaren Offset zur tatsächlichen Fahrzeuggeschwindigkeit haben kann. Diese Maximaldrehzahlkurve wäre somit zwar nicht als z. B. Fahrzeug-Referenzgeschwindigkeit o. ä. geeignet, doch bietet sie - da sie im zeitlichen Verlauf der tatsächlichen Fahrzeuggeschwindigkeit gut entspricht - einfachste und beste Möglichkeiten, durch Bildung ihres Gradienten (Differenziation) die wahre Fahrzeugbeschleunigung bzw. -verzögerung zu ermitteln.

Die Hüllkurve bzw. Maximaldrehzahlkurve $v_x$ wird ständig, also auch bereits im ungebremsten Betriebszustand ermittelt. Bis zum erstmaligen Blockieren bzw. "Abstürzen" des Rades, d. h. in der Anbremsphase wird sie unter Verwendung einer sehr kleinen Tiefpaßfilter-Zeitkonstanten gebildet, da bis dahin - unter der Annahme nicht oder nur gering schlupfender Räder - lediglich die Ungleichförmigkeiten beim Abrollen der Räder ausgefiltert werden müssen und andererseits die sehr schnelle Änderung der Fahrzeugverzögerung während des Anbremsens erfaßbar sein muß.

Danach wird dann eine sehr viel größere Tiefpaßfilter-Zeitkonstante zur Bildung der Maximaldrehzahlkurve $v_x$ verwendet.

Bei der Durchführung der Antiblockierregelung wird erfindungsgemäß in vielfältiger Weise auf die aus der Maximaldrehzahlkurve $v_x$ gewonnene Fahrzeugbeschleunigung bzw. -verzögerung zurückgegriffen, unter anderem bei der Ermittlung des Blockierbeginns bzw. der Blockiergefährdung des gebremsten Fahrzeugrades 1. Hierzu wird in der elektronischen Steuer- und Regeleinrichtung 7 parallel zur Bildung der Maximaldrehzahlkurve $v_x$ ständig der Gradient der Maximaldrehzahlkurve und der Gradient der erfaßten Raddrehgeschwindigkeit (Istwert) $v_1$ gebildet und miteinander verglichen. Auf diese Weise wird ein erster Zeitpunkt $t_1$ erfaßt, zu

dem der Gradient der erfaßten Raddrehgeschwindigkeit (Istwert) $v_1$ einen - in der in Fig. 3a bis 3c dargestellten Anbrems- und Suchphase - fest vorgegebenen Wert von betragsmäßig z. B. 1,2 bis 1,5 g überschreitet oder - während der in den Figuren 4a bis 4c dargestellten Regelphase - um einen fest vorgegebenen Wert von z. B. betragsmäßig etwa 0,5 g größer wird als der Gradient der Maximaldrehzahlkurve $v_x$. In diesem Zusammenhang sei darauf hingewiesen, daß die Darstellungen der Figuren 3a bis 4c lediglich prinzipienhafte Darstellungen sind, also keine unmittelbaren Rückschlüsse auf irgendwelche Größenverhältnisse o. ä. zulassen; zum in der Zeichnung eingetragenen Zeitpunkt $t_1$ liegen diese Relationen zeichnerisch also nicht unbedingt vor. Der Eintritt der Blockiergefährdung des Fahrzeugrades 1 wird nun durch ständigen Vergleich der erfaßten Raddrehgeschwindigkeit $v_1$ dieses Fahrzeugrades mit einer auf der Basis des erfaßten ersten Zeitpunktes $t_1$ und des zu diesem Zeitpunkt vorliegenden Gradienten der erfaßten Raddrehgeschwindigkeit $v_1$ gebildeten Raddrehgeschwindigkeits-Vergleichsgeraden (Vergleichsrampe) ermittelt, die zum erfaßten ersten Zeitpunkt $t_1$ größenmäßig mit der erfaßten Raddrehgeschwindigkeit $v_1$ übereinstimmt und zeitlich mit dem zu diesem Zeitpunkt vorliegenden Gradienten der Raddrehgeschwindigkeit $v_1$ abnimmt. Diese Raddrehgeschwindigkeits-Vergleichsgerade ist in Fig. 3a gestrichelt eingezeichnet und mit $v_{VA}$ beziffert.

Auf diese Weise wird ein zweiter Zeitpunkt $t_2$ ermittelt, zu dem die Differenz zwischen der erfaßten Raddrehgeschwindigkeit $v_1$ und der Raddrehgeschwindigkeits-Vergleichsgeraden $v_{VA}$ einen fest vorgegebenen ersten Schwellwert, eine sogenannte Radaktivitätsschwelle $\Delta v_1$ überschreitet, was von der elektronischen Steuer- und Regeleinrichtung 7 als Eintritt der Blockiergefährdung des Fahrzeugrades 1 erkannt wird und zur Abgabe geeigneter Steuer- bzw. Regelsignale für den elektrischen Stellantrieb des diesem Rad zugeordneten Bremsdruckmodulators 5 führt. Der erste Schwellwert $\Delta v_1$ wird dabei vorzugsweise geschwindigkeitsabhängig sowie für Vorder- und Hinterräder unterschiedlich groß bemessen; er kann mit Vorteil auch jeweils vergrößert werden, wenn Bodenwellen überfahren werden.

Bis zum Eintritt der Blockiergefährdung zum zweiten Zeitpunkt $t_2$ ist im Radbremszylinder des betrachteten Fahrzeugrades 1 vom durch das Bremspedal 4 betätigten Hauptbremszylinder 3 ein bestimmter Hydraulikdruck aufgebaut worden, der in Fig. 3c mit $P_B$ bezeichnet ist. Der zugeordnete Bremsdruckmodulator 5 ist bis zu diesem Zeitpunkt noch inaktiv. Sein Modulatorkolben 8 befindet sich also in der in Fig. 2 gezeigten Ruhelage, so daß der Kolbenweg 1 in Fig. 3b bis zum Zeitpunkt $t_2$

noch Null ist.

Bei Eintritt eines "Radabsturzes", was ja bedeutet, daß während des Bremsvorganges in der in Fig. 1 dargestellten bekannten Reibwert/Schlupf-Kurve betriebsmäßig ein Übergang in den rechts des maximalen Reibwertes $\mu_{max}$ liegenden Instabilitätsbereich stattfindet, wird von einer Antiblockierregelung zunächst einzig gefordert, den in der Bremse 2 des "abstürzenden", d. h. blockierenden Fahrzeugrades 1 wirksamen Bremsdruck schnellstmöglich so schnell und so stark abzusenken, daß das Blockieren dieses Rades beseitigt ist; erst wenn das erreicht ist, muß wieder dafür Sorge getragen werden, daß das Rad in gewünschter Weise möglichst effektiv abgebremst wird.

Von der elektronischen Steuer- und Regeleinrichtung 7 wird daher, sobald sie zum zweiten Zeitpunkt $t_2$ den Eintritt der Blockiergefährdung des Fahrzeugrades erkannt hat, für den diesem Fahrzeugrad zugeordneten Bremsdruckmodulator 5 bzw. für dessen elektrischen Stellantrieb eine impulsartig ansteigende maximale Führungsgröße, d. h. ein Steuer- und Regelsignal $i_{smax}$, erzeugt, welches in üblicher Weise in einen geeigneten maximalen Kupplungsstrom für die elektromagnetische Kupplung 13 - bzw. bei einem elektrischen Direktstellantrieb in einen entsprechenden Motorstrom - umgeformt wird, so daß der Modulatorkolben 8 aus seiner in Fig. 2 eingenommenen Ruhelage heraus axial schnellstmöglich in Richtung einer Volumenvergrößerung des Modulatorraums 15 verschoben wird. Mit dieser Axialverlagerung des Modulatorkolbens geht eine entsprechende schnellstmögliche Absenkung des im Radbremszylinder des Fahrzeugrades 1 herrschenden Bremsdrucks einher.

Sobald die Raddrehverzögerung, d. h. die negative Raddrehbeschleunigung des gebremsten Fahrzeugrades 1, welche zu Beginn des "Radabsturzes" ja wesentlich größer war als die Fahrzeugverzögerung, zum dritten Zeitpunkt $t_3$ wieder auf einen der Fahrzeugverzögerung entsprechenden Wert abgesunken ist, wenn also der Gradient der erfaßten Raddrehgeschwindigkeit $v_1$ dem Gradienten der Maximaldrehzahlkurve $v_x$ entspricht, beendet die elektronische Steuer- und Regeleinrichtung 7 den Druckabbau, indem sie die Führungsgröße $i_s$ für den Bremsdruckmodulator 5 ändert. Zu diesem Zeitpunkt besteht nämlich gerade ein Gleichgewicht zwischen der am Fahrzeugrad wirksamen Bremskraft und der Reibkraft zwischen Reifen und Fahrbahn, d. h. es liegt ein Momentengleichgewicht vor zwischen dem auf das Fahrzeugrad von der Fahrbahn ausgeübten Rückantriebsmoment und dem bremsdruckbedingten Bremsmoment. Jede weitergehende Absenkung des Bremsdrucks P würde zwangsläufig zu einer gewissen Unterbremsung des Rades führen. Grundsätzlich ist es durch entsprechende Ausbildung der Führungsgröße $i_s$

aber natürlich auch möglich, den Bremsdruck nach dem dritten Zeitpunkt $t_3$ noch etwas weiter abzubauen, um so die Sicherheit, daß das Fahrzeugrad wiederbeschleunigt, noch weiter zu vergrößern.

Nach Beendigung des Druckabbaus bildet die elektronische Steuer- und Regeleinrichtung 7 die Führungsgröße $i_s$ für den Bremsdruckmodulator 5 derart, daß der Modulatorkolben 8 seine dann gerade eingenommene Modulatorlage zumindest annähernd beibehält und damit auch der wirksame Bremsdruck im Radbremszylinder des zugeordneten Fahrzeugrades 1 zumindest annähernd konstant bleibt und zwar solange, bis dieses Rad zu einem vierten Zeitpunkt $t_4$ wieder auf eine Raddrehgeschwindigkeit $v_1$ beschleunigt hat, die zumindest annähernd einer aus der Fahrzeugverzögerung ermittelten idealen Raddrehgeschwindigkeit entspricht.

Zu diesem Zweck wird in der elektronischen Steuer- und Regeleinrichtung mit jeder Erfassung eines zweiten Zeitpunktes $t_2$, d. h. heißt mit jedem Erkennen einer Blockiergefährdung gleichzeitig eine Raddrehgeschwindigkeits-Idealkurve $v_S$ gebildet, welche zu diesem zweiten Zeitpunkt $t_2$ größenmäßig mit der zuvor gebildeten Raddrehgeschwindigkeits-Vergleichsgeraden $v_{VA}$ übereinstimmt und zeitlich parallel zur Maximaldrehzahlkurve $v_x$ abnimmt. Der so gebildeten Raddrehgeschwindigkeits-Idealkurve liegt die Überlegung zugrunde, daß einerseits das gebremste Fahrzeugrad 1 zum zweiten Zeitpunkt $t_2$ mit ziemlicher Sicherheit gerade den stabilen, d. h. links des maximalen Reibwertes $\mu_{max}$ liegenden Teil der bekannten Reibwert/Schlupf-Kurve verlassen hat und andererseits die Fortschreibung der so gebildeten Raddrehgeschwindigkeits-Idealkurve $v_s$ die zum Maximum der Reibwert/Schlupf-Kurve gehörende fiktive Raddrehgeschwindigkeit angibt, bei der das Rad optimal gebremst würde.

Vorzugsweise wird als vierter Zeitpunkt $t_4$, bis zu dem der Bremsdruck zumindest annähernd konstant gehalten wird, der Zeitpunkt gewählt, zu dem die Differenz zwischen der idealen Raddrehgeschwindigkeit (Sollwert) $v_S$ und der wieder ansteigenden Raddrehgeschwindigkeit $v_1$ einen vorgegebenen zweiten Schwellwert (Abweichungsschwelle) $\Delta v_2$ unterschreitet. Von diesem vierten Zeitpunkt $t_4$ ab wird der Bremsdruckmodulator 5 solange in Richtung einer Hydraulikdruckerhöhung ausgesteuert, bis das zugeordnete Fahrzeugrad 1 erneut als blockiergefährdet erkannt wird. Dazu wird der Modulatorkolben 8 durch Vorgabe einer Führungsgröße $i_s$ mit entsprechend großem Gradienten gleichmäßig und möglichst schnell axial in Richtung seiner Ruhelage zurückgeschoben, wobei der Gradient der Führungsgröße möglichst so groß bemessen wird, daß mit Blick auf die gewählte Raddrehgeschwindigkeits- und Raddrehbeschleunigungsmessung des gebremsten Rades 1 dessen Beobachtung meßtechnisch gerade noch möglich ist.

Dieser große Gradient der Führungsgröße $i_s$ zum gleichmäßig schnellen axialen Zurückschieben des Modulatorkolbens 8 wird nur solange beibehalten, wie das Sperr- oder Kopfventil 9 des Bremsdruckmodulators 5 noch geschlossen ist, d. h. im Bereich des Modulatorkolbenweges $1 > l_{Ventil}$; dieser Zeitpunkt ist in den Figuren 3b und 3c mit $t_5$ bezeichnet. Zu diesem Zeitpunkt ist der am Fahrzeugrad 1 wirksame Hydraulikdruck wieder etwa auf den Wert angehoben, der vorlag, als der Bremsdruckmodulator 5 zum zweiten Zeitpunkt $t_2$ drucksenkend aktiviert wurde.

Zum Zeitpunkt $t_5$ hat die Führungsgröße $i_s$ also einen Wert angenommen, bei dem es zum Öffnen des mechanisch gesteuerten Sperr- bzw. Kopfventils 9 kommen würde. Bei Verwendung eines Reglers mit integralem, d. h. I-Verhalten bzw. bei Verwendung eines P- oder PD-Reglers mit unendlicher Kreisverstärkung im P-Bereich würde nun, nämlich beim Öffnen des Sperr- bzw. Kopfventils 9, der Hydraulikdruck ausgangs des Bremsdruckmodulators 5, d. h. in der Hydraulikleitung 11 unverzüglich den Wert des eingangs des Bremsdruckmodulators 5 herrschenden Hydraulikdrucks annehmen. Da der bei Betätigung des Bremspedals 4 vom Hauptbremszylinder 3 erzeugte Hydraulikdruck im allgemeinen erheblich über den zum zweiten Zeitpunkt $t_2$ herrschenden Druck $P_B$ hinaus ansteigt, würde der Hydraulikdruck ausgangs des Bremsdruckmodulators dann also sprungartig auf den vom Hauptbremszylinder erzeugten wesentlich höheren Druckwert ansteigen. Eine sprungartige Erhöhung des Bremsdrucks, d. h. des am Fahrzeugrad 1 wirksamen Bremsmoments ist unerwünscht, da sie durch ihre Dynamik unnötigerweise zu einem vorzeitigen erneuten Blockieren dieses Rades führen könnte.

Es ist deshalb von Vorteil, den Modulatorkolben 8 durch die elektronische Steuer- und Regeleinrichtung 7 nach Art eines PD-Reglers mit endlicher Verstärkung lage- bzw. wegzuregeln und dabei den Gradienten der Führungsgröße $i_s$ für die Modulatorkolbenlage bzw. den Modulatorkolbenweg 1 im Bereich $1 < l_{Ventil}$ (Sperr- bzw. Kopfventil 9 öffnet) stark zu phlegmatisieren, um so zu erreichen, daß der vom vierten Zeitpunkt $t_4$ ab mit etwa konstantem Gradienten stetig ansteigende Hydraulikdruck im Radbremszylinder auch über den Zeitpunkt $t_5$ hinaus mit zumindest annähernd dem gleichen Gradienten weiter gleichmäßig schnell bis zum Erfassen eines erneuten "Radabsturzes" bzw. "qualifizierten Einbruchs" der Raddrehgeschwindigkeit $v_1$ zum Zeitpunkt $t_2^*$. Der zum Zeitpunkt $t_2^*$ erreichte Wert des im Radbremszylinder des gebremsten Rades 1 wirksame Hydraulikdruck ist - nichtverschlechterte Fahrbahnverhältnisse vorausgesetzt - bei einem im Ausführungsbeispiel vorausgesetzten Vorderrad im allgemeinen spürbar höher als zum Zeitpunkt $t_2$ unmittelbar zu Beginn des Bremsvorganges, weil das an diesem Rad wirksame Produkt aus Reibwert $\mu$ und vertikaler Radkraft $F_z$ infolge der mit dem Abbremsen des Fahrzeuges verbundenen dynamischen Achslastveränderung zum Zeitpunkt $t_2^*$ größer ist als zum Zeitpunkt $t_2$. Auch eine zwischenzeitliche Vergrößerung des Reibwertes $\mu$ führt natürlich dazu, daß der erneute "Radabsturz" zum Zeitpunkt $t_2^*$ erst bei einem entsprechend höheren Hydraulikdruck eintritt.

Das Ende dieser Suchphase ist mit der Erfassung des erneuten "Radabsturzes" bei $t_2^*$ erreicht. Die Steuerung und Regelung des Bremsdruckmodulators 5 wird danach in die anschließende Regelphase überführt, wobei der bei $t_2^*$ erfaßte Istwert der Modulatorkolbenlage bzw. des Modulatorkolbenweges 1 quasi als Startwert für die unmittelbar anschließende Regelphase übernommen wird.

In den Figuren 3a bis 3c ist der Beginn einer ersten solchen Regelphase des betrachteten Antiblockierregelzyklus' angedeutet.

Die während solcher Regelphasen ablaufenden Vorgänge sind in Fig. 4 prinzipienhaft näher erläutert. Entsprechend der Darstellung in den Figuren 3a bis 3c ist in Fig. 4a wiederum der zeitliche Verlauf der Raddrehgeschwindigkeit $v_1$ sowie der Maximaldrehzahlkurve $v_x$, in Fig. 4b der zeitliche Verlauf der von der elektronischen Steuer- und Regeleinrichtung für den Bremsdruckmodulator gelieferten Führungsgröße $i_s$ sowie der Lage bzw. des Weges 1 des Modulatorkolbens und in Fig. 4c der zeitliche Verlauf des ausgangs des Bremsdruckmodulators und damit im Radbremszylinder des zugeordneten Rades wirksamen Hydraulikdrucks dargestellt.

Sobald von der elektronischen Steuer- und Regeleinrichtung 7 zum Zeitpunkt $t_2^*$ der "Radabsturz" des gebremsten Fahrzeugrades 1 festgestellt wird, wird der zur Beseitigung des Blockierens erforderliche Druckabbau durch einen sprungartigen Anstieg der Führungsgröße $i_s$ auf einen wesentlich höheren Wert als zuvor eingeleitet, was den Lage- bzw. Wegregler der elektronischen Steuer- und Regeleinrichtung veranlaßt, den Modulatorkolben 8 mit maximal möglicher Geschwindigkeit in Richtung einer Volumenvergrößerung des Modulatorraums 15 zu bewegen, wodurch der im Radbremszylinder des gebremsten Rades 1 wirksame Hydraulikdruck schnellstmöglich abgesenkt wird, und zwar solange bis zum Zeitpunkt $t_3^*$ die Raddrehverzögerung des Rades wieder etwa auf einen der Fahrzeugverzögerung entsprechenden Wert abgesunken ist und am Rad etwa Momentengleichgewicht herrscht zwischen dem wirksamen Bremsmoment und dem von der Fahrbahn ausgeübten Rückantriebsmoment.

Ein geringfügiges weiteres Druckabsenken (unter dieses Momentengleichgewicht) läßt das gebremste Rad 1 also wieder beschleunigen.

Während der zum Zeitpunkt $t^*_2$ erfaßte und gespeicherte Wert der Kolbenlage bzw. des Kolbenweges 1 einen etwa dem idealen Hydraulikdruck bzw. dem Haftreibbeiwert entsprechenden Betriebszustand des Bremsdruckmodulators repräsentiert, repräsentiert er zum Zeitpunkt $t^*_3$ einen etwa dem Gleitreibbeiwert entsprechenden Betriebszustand.

Während des bei $t^*_3$ beginnenden Wiederbeschleunigens des gebremsten Rades wird begonnen, den bei $t^*_3$ erfaßten Istwert der Modulatorkolbenlage 1 konstant einzuregeln. Hierzu wird von der elektronischen Steuer- und Regeleinrichtung 7 auf die Führungsgröße $i_{soll}$ solange ein Term addiert, bis der Istwert der Modulatorkolbenlage dem bei $t^*_3$ gemessenen Wert annimmt und beibehält. Auf diese einfache Weise wird die druckabhängige Regelabweichung des eingesetzten PD-Reglers (mit endlicher Kreisverstärkung) als Differenz zwischen dem Istwert der konstant geregelten Kolbenlage und der zugehörigen Führungsgröße $i_s$ ermittelt, deren Kenntnis erforderlich ist, wenn die elektronische Steuer- und Regeleinrichtung den Modulatorkolben später durch Vorgabe einer definierten Führungsgröße gezielt wieder in die zum Zeitpunkt $t^*_2$ eingenommene Lage zurückstellen soll.

Die Modulatorkolbenlage 1 wird nun solange konstant gesteuert bzw. geregelt, bis das Fahrzeugrad wieder auf eine Raddrehgeschwindigkeit $v_1$ beschleunigt hat, bei der die Differenz zwischen der erfaßten Raddrehgeschwindigkeit $v_1$ und der in zuvor beschriebener Weise festgelegten idealen Raddrehgeschwindigkeit (Sollwert) $v_s$ den vorgegebenen zweiten Schwellwert, die Abweichungsschwelle $\Delta v_2$ zum Zeitpunkt $t^*_4$ unterschreitet. Von diesem Zeitpunkt ab wird der Bremsdruckmodulator durch Setzen der Modulatorkolbenlage-Führungsgröße $i_s$ wieder in einen Zustand gebracht, der kurz vor dem Zeitpunkt $t^*_2$ geherrscht hat, bei dem das Fahrzeugrad nahezu optimal, d. h. nahezu mit dem Reibwert $\mu_{max}$ gebremst war. Dementsprechend steigt der im Radbremszylinder des gebremsten Rades wirksame Hydraulikdruck definiert auf einen Wert an, der nur geringfügig, jedoch ausreichend niedriger ist als der bei Erfassung des Radabsturzes vorliegende Bremsdruck $P_B$.

Auf diese Weise wird sehr schnell ein Betriebszustand nahe $\mu_{max}$, dem Haftreibbeiwert, eingestellt, andererseits aber mit Sicherheit ein sofortiges Wiederblockieren dieses Rades vermieden.

Das "Setzen" der Führungsgröße $i_s$ zur Einsteuerung dieses Betriebszustandes erfolgt stetig und möglichst schnell, jedoch nicht sprungartig; schnelle dynamische Druckerhöhungen könnten nämlich ein zu frühes Blockieren dieses Rades hervorrufen.

In einer der vorbeschriebenen Regelphase nachfolgenden Wiederbelastungsphase wird der Bremsdruckmodulator 5 des geregelt gebremsten Fahrzeugrades 1 wieder solange stetig und langsam im Sinne einer Erhöhung des im Radbremszylinder dieses Rades wirksamen Hydraulikdrucks gesteuert bzw. geregelt, d. h. der Modulatorkolben 8 wird solange stetig und langsam in Richtung seiner Ruhelage (Volumenverkleinerung des Modulatorraums 15) verschoben, bis dieses Fahrzeugrad von der elektronischen Steuer- und Regeleinrichtung zum Zeitpunkt $t^{***}_2$ erneut als blockiergefährdet erkannt wird.

Das Zurückschieben des Modulatorkolbens in Richtung Ruhelage bzw. das Erhöhen des Hydraulikdrucks während dieser Wiederbelastungsphase zwischen $t^*_4$ und $t^{***}_2$ wird normalerweise mit erheblich kleinerem Gradienten durchgeführt als während der in den Figuren 3b und 3c zwischen $t_4$ und $t^*_2$ dargestellten Suchphase.

Der vergleichsweise hohe Gradient der Hydraulikdruckerhöhung während der Suchphase wird gewählt, um den Bremsdruck in der Anfangsphase des Bremsvorganges nach erstmaliger Druckabsenkung so schnell wie es die meßtechnischen Möglichkeiten (Beobachtung des Drehverhaltens) überhaupt nur zulassen, auf ein dem eingebremsten, quasi stationären Zustand entsprechendes Druckniveau zu erhöhen, um die mögliche Unterbremsung des gebremsten Rades so kurz wie möglich zu halten; das erstmalige Blockieren des Rades bei $t_2$ findet ja bereits bei einem niedrigeren Bremsdruck $P_B$ statt, weil die zuvor erwähnte beim Bremsen auftretende dynamische Achslastveränderung (Vergrößerung des Produkts $\mu \cdot F_z$) zu dem Zeitpunkt am betreffenden Rad noch nicht voll zur Wirkung gekommen ist. Demgegenüber dient der im Vergleich dazu sehr viel kleinere Gradient des Hydraulikdruckanstiegs während der Wiederbelastungsphase von $t^*_4$ bis $t^{***}_2$ dazu, den Bremsdruck vom definiert eingesteuerten Wert aus vorsichtig und sehr langsam noch näher an den optimalen Druckwert, d. h. in Richtung einer noch besseren Haftwertausnutzung zu führen. Auf diese Weise gelingt es, die geregelte Abbremsung jeweils vergleichsweise lange im optimalen Bereich der bekannten Reibwert/Schlupf-Kurve zu betreiben. Die langsame stetige Druckanhebung während der Wiederbelastungsphase führt natürlich auch dazu, daß auch zwischenzeitlich gegebenenfalls eingetretene Fahrbahnverbesserungen für die Abbremsung ausgenutzt werden.

Der Wiederbelastungsphase schließt sich - sobald von der elektronischen Steuer- und Regeleinrichtung ein erneutes Blockieren des Rades erfaßt wird - eine weitere Regelphase an, in der dann die am Ende der Wiederbelastungsphase erfaßten und gespeicherten Werte z. B. der Modulatorkolbenlage o. ä. zur späteren definierten Einstellung des Aussteuerungszustands des Bremsdruckmodulators bei $t^{***}_4$ Verwendung findet. In dieser Weise werden die betroffenen Bremsdruckmodulatoren 5 unter ständiger Aktualisierung der in den Speichereinheiten der elektronischen Steuer- und Regeleinrichtung gespeicherten relevanten Werte alternierend entsprechend der Regel- und der Wiederbelastungsphase gesteuert bzw. geregelt.

Beim Überfahren eines Streckenabschnittes mit sich sprungartigem Verändern des Reibwerts von einem großen zu einem kleinen Reibwert findet während der Regel- und Wiederbelastungsphasen ohne Schwierigkeit in kürzest möglicher Zeit eine optimale Anpassung des eingesteuerten bzw. -geregelten Bremsdrucks an die geänderten Fahrbahnverhältnisse statt. Schwieriger wird eine schnellstmögliche Anpassung jedoch bei einem Reibwertsprung von einem niedrigen Wert auf einen hohen Wert, da dies von den Sensoreinrichtungen nicht immer schnell und genau genug erkannt und angezeigt wird. Indizien für einen plötzlich vorliegenden höheren Reibwert sind z. B., daß eine hohe (positive) Raddrehbeschleunigung (jedoch nur in bestimmten Fällen) auftritt oder daß längere Zeit keine Druckentlastung erforderlich ist, d. h. keine Blockiergefährdung registriert wird.

Nun könnte daran gedacht werden, den Druckanstiegsgradienten während der Wiederbelastungsphase progressiv zu gestalten, um dadurch einerseits eine relativ feinfühlige Regelung und andererseits genügend kurze Druckaufbauzeiten bei einem Übergang von einem sehr kleinen zu einem sehr großen Reibwert zu realisieren. Eine solche progressive Gestaltung des Gradienten widerspräche jedoch den mit der Wiederbelastungsphase verfolgten Intentionen. Nun ist z. B. aus der DE-OS 38 41 718 bekannt, daß ein gebremstes Rad grundsätzlich auf einen optimalen Schlupfwert geregelt werden kann, indem in einem geschlossenen Drehzahlregelkreis die zeitlichen Drehzahlschwankungen beobachtet werden, die umso größer sind je näher das Rad am optimalen Schlupfbereich geregelt wird, weil hier der Quotient $\frac{dn}{ds}$ sehr klein wird und weil andererseits schon kleine Radlastschwankungen $\Delta F_z$ die Bremskraft größer werden lassen können als die Reibkraft $\mu \cdot F_z$.

Die Erkenntnis, daß die zuvor vorhandene Drehzahlunruhe, d. h. zeitliche Drehzahlschwankung bei einem Sprung von einem kleinen Reibwert auf einen großen Reibwert wegen des dann plötzlich stark unterbremsten Zustands spontan abnimmt, kann nun in vorteilhafter Weise dazu ausgenutzt werden, das erfindungsgemäße Antiblockierregelsystem für diesen speziellen Betriebszustand weiter zu optimieren. Die elektronische Steuer- und Regeleinrichtung 7 erkennt aufgrund der ihr zugeführten Ausgangssignale der verschiedenen Sensoreinrichtungen ohne Schwierigkeiten, wenn während der Wiederbelastungsphase eine spontane Abnahme der zuvor vorhandenen Drehzahlunruhe auftritt und ändert in Reaktion darauf die Führungsgröße für den Bremsdruckmodulator in der Weise, daß der Hydraulikdruck während der Wiederbelastungsphase zwischen $t^*_4$ bis $t^{***}_2$ mit größerem Gradienten als normalerweise ansteigt, vorzugsweise mit einem ähnlich großen Gradienten wie während der Anbrems- und Suchphase, d. h. so schnell, wie es die meßtechnischen Möglichkeiten zur Beobachtung des Drehverhaltens der gebremsten Fahrzeugräder zuläßt.

Problematisch ist das Verhalten üblicher Antiblockierregelsysteme beim Überfahren von Bodenunebenheiten, bei dem sich das Produkt aus Reibwert $\mu$ und Radlast $F_z$, das letztlich ja die erreichbare Fahrzeugverzögerung bestimmt, ja jeweils sprungartig ändert. Da sich der zeitliche Mittelwert von $\mu \cdot F_z$ wäre die erzielte mittlere Fahrzeugverzögerung bei konstant gehaltenem Bremsdruck beim Überfahren von Bodenwellen an sich genau so groß wie wenn keine solche Bodenwellen vorlägen; die Raddrehgeschwindigkeit würde dabei lediglich bei der Verkleinerung von $\mu \cdot F_z$ zunächst absinken, bei der folgenden Vergrößerung von $\mu \cdot F_z$ jedoch sofort wieder zunehmen, so daß das Rad nach Überfahren der Bodenwelle wieder seinen Ausgangszustand erreicht. Bei herkömmlichen Antiblockierregelsystemen führt das Überfahren von Bodenwellen während des Bremsens häufig zur Druckabsenkung und damit zu einem unbegründeten Bremswegverlust, da die beim Überfahren von Bodenwellen auftretenden Raddrehverzögerungen nachhaltig als Blockieren des Rades fehlinterpretiert werden,

Mit dem erfindungsgemäßen Antiblockierregelsystem ist es nun wegen der ständigen Erfassung und Speicherung der wesentlichen Betriebsparameter der Bremsanlage, insbesondere des Aussteuerungszustandes des Bremsdruckmodulators in einfacher Weise möglich, durch das Überfahren von Bodenunebenheiten begründete Bremswegverluste während der Regel- und Wiederbelastungsphase vergleichsweise klein zu halten.

Ausgehend von der Beobachtung, daß bei einer bodenwellenbedingten Raddrehgeschwindigkeitsänderung die Raddrehbeschleunigung betragsmäßig stets größer ist als die ihr vorangegangene Raddrehverzögerung, wird dies als sicheres Indiz für eine bodenwellenbedingte Änderung des Produkts $\mu \cdot F_z$ gewertet. Von der elektronischen Steuer- und Regeleinrichtung wird deshalb die aufgrund der Erfassung eines zweiten Zeitpunktes $t_2$, $t^*_2$ etc. in Richtung einer Hydraulikdruckabsenkung geänderte Führungsgröße $i_s$ stets dann, wenn sie registriert, daß die Raddrehbeschleunigung betragsmäßig größer wird als die dieser vorangegangene Raddrehverzögerung, schnellstmöglich wieder auf den Wert zurückstellen, den sie beim vermeintlichen Blockierbeginn zu diesem zweiten Zeitpunkt $t_2$, $t^*_2$ etc. besaß.

Wegen der vom Bremsdruckmodulator wegen der schnellen Rückführung der Führungsgröße hervorgerufenen Radreaktion ist es von Vorteil, die Ansprechempfindlichkeit der elektronischen Steuer- und Regeleinrichtung durch eine kurzzeitige starke Vergrößerung, z. B. mindestens durch eine Verdopplung des ersten Schwellwertes (Radaktivitätsschwelle) $\Delta v_1$ vorübergehend zu verringern, um dadurch sicherzustellen, daß von der elektronischen Steuer- und Regeleinrichtung nicht erneut ein lediglich bodenwellenbedingtes vermeintliches Blockieren festgestellt wird.

Von Vorteil ist es, wenn zusätzlich immer dann und solange, wie die Raddrehbeschleunigung während der Regelphase betragsmäßig um einen vorgegebenen Wert größer ist als die Fahrzeugverzögerung, die Führungsgröße $i_s$ für den Bremsdruckmodulator mit einem großen Gradienten in Richtung einer Hydraulikdruckerhöhung verändert wird. Die Modulatorkolbenlage würde dann also für den betreffenden Zeitraum abweichend von der Darstellung in Fig. 4b nicht konstant gesteuert bzw. geregelt werden, sondern verringert werden. Diese Maßnahme würde sich nicht nur bei Bodenwellen auswirken, sondern auch bei Reibwert/Schlupf-Kurven mit einem stark ausgeprägten Maximum.

Die angesprochene Bodenwellen-Problematik entfällt im übrigen quasi nebenbei, wenn die betroffenen Bremsdruckmodulatoren während der Wiederbelastungsphasen in Fortbildung der Erfindung in vorteilhafter Weise jeweils durch eine Führungsgröße gesteuert bzw. geregelt werden, welche eine Grundgröße und eine dieser aufintegrierte spezielle Zusatzgröße DI enthält, wobei die Grundgröße jeweils dem am Ende der vorangegangenen Regelphase eingesteuerten Aussteuerungszustand (z. B. Modulatorkolbenlage, Kupplungsstrom) der Bremsdruckmodulatoren entspricht bzw. proportional ist, wohingegen die Zusatzgröße durch eine in den Speichereinheiten der elektronischen Steuer- und Regeleinrichtung abgespeicherte nichtlineare Funktion von der Differenz zwischen Fahrzeugbeschleunigung $B_F$ und Raddrehbeschleunigung $B_{rad}$ bestimmt ist.

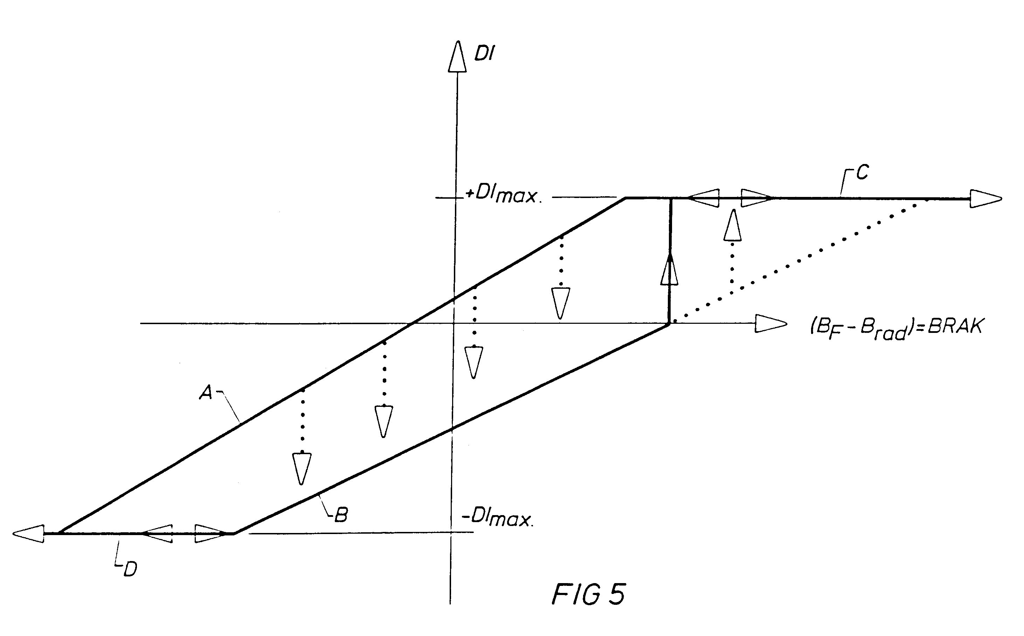

Eine geeignete solche Funktion ID = $f$ ($B_F$ - $B_{rad}$) = $f$ (BRAK) ist prinzipienhaft in Fig. 5 dargestellt. Sie stellt eine etwa Z-förmige hystereseähnliche geschlossene Kurve dar, mit einem linear ansteigenden oberen Kennlinienast A und einem dazu beabstandeten ebenfalls linear ansteigenden, im wesentlichen negativen unteren Kennlinienast B. Steigung sowie gegenseitiger Abstand dieser beiden Kennlinienäste hängt u. a. von den Eigenschaften der eingesetzten Regler ab. Im Ausführungsbeispiel weist der obere Kennlinienast A eine größere Steigung auf als der untere Kennlinienast, so daß sich der Vertikalabstand zwischen den beiden Kennlinienästen zur rechten Kurvenseite hin vergrößert.

Die Funktion DI wird nach beiden Seiten begrenzt. Durch diese Begrenzung wird sichergestellt, daß der Grundgröße der Führungsgröße auch bei auftretenden plötzlichen Raddrehbeschleunigungen (z. B. beim Abrollen des Rades auf welligem Untergrund) keine zu großen DI-Werte aufintegriert werden, was ja entsprechend große Bremsdruckänderungen zur Folge hätte, die u. U. zu nur sehr schwer beherrschbaren Bremsverhältnissen führen könnten. Auf diese Weise wird es möglich, während der Wiederbelastungsphase trotz mitunter sehr großer Informationssprünge eine sehr feinfühlige Regelung des Bremsdruckmodulators bzw. des Bremsdrucks durchzuführen.

Vorzugsweise erfolgt die Begrenzung der DI-Werte asymmetrisch, d. h. der negative Maximalwert - $DI_{max}$ wird größer gemacht als der positive Maximalwert + $DI_{max}$, wodurch regelungstechnisch erreicht wird, daß im zeitlichen Mittel stets eine Druckerhöhung erzielt wird; die belastende Komponente bei $\mu$ · $F_z$-Änderungen (z. B. beim Überfahren von Bodenwellen o. ä.) wird also stärker berücksichtigt als die entlastende Komponente.

Mit der Aufintegration der in Fig. 5 dargestellten Zusatzgröße DI auf die Grundgröße der Führungsgröße $i_s$ während der Wiederbelastungsphase wird im Prinzip eine Beschleunigungsregelung des gebremsten Rades auf einen vorgegebenen Sollwert durchgeführt, wobei dieser Sollwert von der Fahrzeugbeschleunigung (von der negativen Fahrzeugbeschleunigung, nämlich der Fahrzeugverzögerung), d. h. von der Steigung der Hüllkurve bzw. der Maximaldrehzahlkurve $v_x$ bestimmt ist.

Regelungstechnisch wird die in Fig. 5 dargestellte Zusatzgröße zur Bildung der Führungsgröße $i_s$ derart eingesetzt, daß dann und solange wie das gebremste Fahrzeugrad 1 nach seiner Ende der Regelphase erfolgten Wiederbeschleunigung die ideale Raddrehgeschwindigkeit (Sollwert) $v_s$ erreicht oder überschritten hat, DI-Werte des unteren Kennlinienastes B aufintegriert werden und dann und solange wie das gebremste Rad nach dieser Wiederbeschleunigung sich noch in einem größeren Schlupf befindet, d. h. mit einer noch unter der idealen Raddrehgeschwindigkeit $v_s$ liegenden Raddrehgeschwindigkeit $v_1$ umläuft, DI-Werte des oberen Kennlinienastes A aufintegriert werden. Dabei führen negative DI-Werte zu einer Verringerung der Führungsgröße $i_s$ und damit zu einer Bremsdruckerhöhung und positive DI-Werte entsprechend zu einer Druckabsenkung.

Diese vorteilhafte Wiederbelastungsregelung mit Hilfe der Zusatzgröße DI wird jeweils gegen Ende der Regelphase zum Zeitpunkt t*4 gestartet, wenn die Raddrehgeschwindigkeit $v_1$ den vorgegebenen zweiten Schwellwert $\Delta v_2$ zur idealen Raddrehgeschwindigkeit $v_s$ unterschreitet. Da das Fahrzeugrad 1 zu diesem Zeitpunkt also definitionsgemäß die ideale Raddrehgeschwindigkeit $v_s$ noch nicht erreicht hat, wird diese Wiederbelastungs-Regelung zwangsläufig mit einem auf dem oberen Kennlinienast A liegenden DI-Wert gestartet. Wäre zu diesem Zeitpunkt $B_F - B_{rad} = BRAK \geq 0$, d. h. wäre zu diesem Zeitpunkt die Raddrehverzögerung bzw. die negative Raddrehbeschleunigung größer als die Fahrzeugverzögerung bzw. die negative Fahrzeugbeschleunigung, d. h. hätte zu diesem Zeitpunkt das Fahrzeugrad keine Tendenz zur Schlupfverringerung, dann würde wegen des dann maßgeblichen positiven DI-Wertes der für das gebremste Fahrzeugrad maßgebliche Hydraulikdruck reduziert werden. Normalerweise ist zu diesem Zeitpunkt t*4 der Wert BRAK jedoch viel kleiner als 0, d. h. $BRAK = B_F - B_{rad} \ll 0$, so daß aufgrund des dann maßgeblichen negativen DI-Wertes der Bremsdruck dieses Rades stetig erhöht wird. Wenn das gebremste Rad hierbei die ideale Raddrehgeschwindigkeit $v_s$ erreicht, dann wird regelungstechnisch vom oberen Kennlinienast A auf den unteren Kennlinienast B gesprungen, was eine schnellere Bremsdruckerhöhung bedeutet. Dieser Übergang auf den unteren Kennlinienast ist durch punktierte Pfeile angedeutet. Man erkennt, daß der DI-Wert auf diesem Kennlinienast, der ja gilt solange die Raddrehgeschwindigkeit $v_1$ die ideale Raddrehgeschwindigkeit $v_s$ erreicht oder sogar überschritten hat, auch dann noch negativ sind, wenn $BRAK \geq 0$ wird, d. h. wenn nunmehr die Raddrehverzögerung gleich oder größer wird als die Fahrzeugverzögerung. Infolge der durch diese negativen DI-Werte bewirkten stetigen Bremsdruckerhöhung besitzt dieses Rad somit die Tendenz zu größeren Schlupfwerten. Auf diese Weise wird erreicht, daß wenn und solange die ideale Raddrehgeschwindigkeit $v_s$ erreicht ist, eine stetige langsame Druckerhöhung stattfindet, d. h. der Betriebspunkt immer weiter in Richtung größerer Schlupfwerte geführt wird, was eine Optimierung des Bremsvorganges bedeutet.

Der untere Kennlinienast B ist nun derart gelegt, daß er die Abszissenachse des Koordinatensystems bei einem Wert von etwa 0,5 g, d. h bei etwa 5 $m/s^2$ trifft. Dieser Punkt ist mit BRAK 0 bezeichnet. Für diesen Betriebspunkt ist die Zusatzgröße DI = 0, so daß der Bremsdruck konstant gehalten wird. Solange auf dem unteren Kennlinienast B - bis zum Betriebspunkt BRAK 0 - gearbeitet wird, wird durch die dadurch bewirkte Bremsdruckerhöhung zwangsläufig der Bremsschlupf vergrößert.
Erstmals beim Betriebspunkt BRAK 0 ist - wenn die Raddrehgeschwindigkeit $v_1$ kleiner als die ideale Raddrehgeschwindigkeit $v_s$ wird - programmtechnisch vorgesehen, daß vom unteren Kennlinienast B auf den oberen Kennlinienast A gesprungen werden kann, was durch einen entsprechenden Pfeil angedeutet ist. Das Springen auf den oberen Kennlinienast A bzw. auf dessen horizontale Begrenzung C bewirkt, daß nunmehr eine stetige Bremsdruckverringerung stattfindet, und zwar solange, bis die Raddrehgeschwindigkeit $v_1$ wieder die ideale Raddrehgeschwindigkeit $v_s$ erreicht und die elektronische Steuer- und Regeleinrichtung daraufhin wieder auf den unteren Kennlinienast B springt.

Im allgemeinen ist die Raddrehgeschwindigkeit $v_1$ bei Erreichen des Betriebspunkts BRAK 0 bereits kleiner als die ideale Raddrehgeschwindigkeit $v_s$ geworden, so daß im allgemeinen bei Erreichen dieses Betriebspunktes auf die obere Kennlinie gesprungen wird. Aus diesem Grunde ist der untere Kennlinienast B rechts des Betriebspunktes BRAK 0 nur punktiert dargestellt. Dieser punktierte Teil des unteren Kennlinienastes wird regelungstechnisch dann beschritten, wenn das Fahrzeugrad bei Erreichen des Betriebspunktes BRAK 0 noch mindestens mit der idealen Raddrehgeschwindigkeit dreht. Bei Unterschreiten dieser idealen Raddrehgeschwindigkeit wird dann von dort auf den oberen Kennlinienast bzw. dessen horizontale Begrenzung C gesprungen.

Durch das Aufintegrieren der Zusatzgröße DI findet während der Wiederbelastungsphase eine sehr feinfühlige Regelung des Bremsdruckmodulators statt, mit der es gelingt, das gebremste Rad mit nur sehr kleinen Schwingungsamplituden ständig in der Nähe des Reibwertmaximums zu regeln, wobei darauf hinzuweisen ist, daß die von der Zusatzgröße DI gelieferten Komponenten der Führungsgröße $i_s$ im allgemeinen betragsmäßig sehr viel kleiner sind als die von der gesteuerten Grundgröße herstammenden Komponenten.

Die beidseitige Begrenzung C, D der Kennlinie DI = F (BRAK) muß nicht starr sein. Diese Grenzen können grundsätzlich auch in Abhängigkeit von der erfaßten Fahrzeugverzögerung $B_F$ variiert werden. Eine solche fahrzeugbeschleunigungsabhängige Veränderung der Begrenzung hat u. a. den Vorteil, daß das Inkrement zur Druckveränderung DI praktisch reibwertabhängig gemacht wird, was regelungstechnisch erwünscht ist, da der Blockierdruck an dem jeweiligen Rad im Prinzip proportional zum Reibwert ist und somit immer gleiche relative Änderungen zum Blockierdruck durch denselben BRAK-Wert erreicht werden.

Wenn die Führungsgröße $i_s$ zur Steuerung bzw. Regelung der Bremsdruckmodulatoren während der Wiederbelastungsphase in vorerwähnter Weise unter Verwendung einer Zusatzgröße der in Fig. 5 dargestellten Art gebildet wird, dann wird auf homogenen Fahrbahnen eine vergleichsweise hochfrequente Druckmodulation erzwungen, wodurch das bremsgeregelte Fahrzeugrad mit nur geringen Drehzahlschwankungen um den maximalen Reibwert $\mu_{max}$ betrieben wird.

Besonders vorteilhaft macht sich die vorbeschriebene Ausbildung der Führungsgröße $i_s$ während der Wiederbelastungsphase auf Schlechtwege-Strecken, d. h. auf sehr welligen Strecken bemerkbar, da durch sie die Bodenwellen-Problematik quasi automatisch unterdrückt wird, weil bei Schwankungen der Raddrehbeschleunigungen um die Fahrzeugbeschleunigung eine regelungstechnisch ausgelöste Druckabsenkung wegen der Charakteristik der in Fig. 5 dargestellten DI-Kennlinie jeweils durch eine mindestens gleichgroße Druckanhebung kompensiert wird und weil solche Druckveränderungen immer nur relativ langsam erfolgen können.

Die Raddrehgeschwindigkeiten werden in an sich bekannter Weise bevorzugt derart erfaßt, daß der vom jeweiligen Rad während eines definierten zeitlichen Meßzyklus' zurückgelegte Weg gemessen wird. In entsprechender Weise wird die Raddrehbeschleunigung bzw. -verzögerung in der Weise ermittelt, daß die Differenz zwischen zwei in dieser Weise aufeinanderfolgend gemessenen Raddrehgeschwindigkeitswerten gebildet wird.
Dieses einfache, jedoch sehr präzise Meßverfahren bedingt, daß der jeweilige Meßwert bzw. das Meßsignal gegenüber der tatsächlichen physikalischen Größe, d. h. der Raddrehgeschwindigkeit bzw. der Raddrehbeschleunigung etwas nacheilt, also ein zeitlicher Phasenverzug zwischen den erfaßten und den tatsächlichen Werten vorliegt, wobei der Phasenverzug der ermittelten Beschleunigungswerte zwangsläufig noch etwas größer ist als der der Geschwindigkeitswerte.

Da die Größe des meßtechnisch bedingten Phasenverzugs der ermittelten zu den tatsächlichen Werten der Raddrehgeschwindigkeit bzw. -beschleunigung/-verzögerungbekannt ist, wird in vorteilhafter Weise durch entsprechende Ausbildung der elektronischen Steuer- und Regeleinrichtung dafür gesorgt, daß dieser Phasenverzug bei der Erzeugung der Führungsgrößen $i_s$ zumindest weitgehend kompensiert wird, wodurch die geregelte Bremsung der Fahrzeugräder 1 weiter optimiert wird. Diese Phasenkompensation kann beispielsweise durch in der elektronischen Steuer- und Regeleinrichtung vorgesehene besondere Phasenkorrekturglieder vorgenommen werden oder durch entsprechende Programmodule für einen in der elektronischen Steuer- und Regeleinrichtung enthaltenen Mikroprozessor o. ä..

Bei Betätigung der Bremsanlage wird zum selben Zeitpunkt i. a. jeweils nur eines der gebremsten Räder, und zwar eines der Vorderräder zu blockieren beginnen, und zwar unabhängig davon, ob die Betätigung des Bremspedals quasi allmählich oder sehr abrupt geschieht. Da wegen des teilweise beträchtlichen Größenunterschiedes zwischen Haft- und Gleitreibbeiwert dann, wenn beim Blockieren dieses einen Vorderrades nur an diesem Rad von der Antiblockierregelung eine Druckabsenkung vorgenommen wird, u. U. so große Giermomente auf das Fahrzeug einwirken können, daß der Fahrer des Fahrzeuges diese oft nur sehr mühsam auslenken kann, ist es bei Antiblockierregelsystemen verbreitet, bei Eintritt einer Blockiergefährdung nur eines der beiden Vorderräder zu Beginn des daraufhin ausgelösten Antiblockierregelzyklus' nicht nur dieses Vorderrad, sondern gleichzeitig auch das andere Vorderrad und vorzugsweise auch die Hinterräder zwangsweise so bremsdruckzusteuern wie es das als blockiergefährdet erkannte Vorderrad erfordert. Später wird der Bremsdruck der noch nicht als blockiergefährdet erkannten Räder wieder stufenweise erhöht.
Auch beim erfindungsgemäßen Antiblockierregelsystem können natürlich solche der Giermomentenabschwächung dienenden Maßnahmen in einfacher Weise während der Anbrems- und Suchphase regelungstechnisch realisiert werden.

Von besonderem Vorteil ist es auch, wenn unter dem Aspekt möglicherweise auftretender Giermomente während der Regel- und Wiederbelastungsphasen des Antiblockierregelzyklus' jeweils die Differenz der Hydraulikdrücke beider Vorderradbremsen durch entsprechende Begrenzung der Differenz in der Aussteuerung der Bremsdruckmodulatoren der beiden Vorderräder begrenzt wird. Durch diese zusätzliche regelungstechnische Maßnahme können in einfacher Weise auch besonders gierempfindliche Fahrzeuge für den Fahrzeuglenker beherrschbarer gehalten werden.

Die Erfindung ist im wesentlichen unter Zugrundelegung einer Lage- und Wegsteuerung bzw. -regelung des Modulatorkolbens eines als Bremsdruckreduzierzylinder ausgebildeten Bremsdruckmodulators erläutert worden.

Der Aussteuerungszustand des Bremsdruckmodulators kann statt mit einer Lage- und Wegsteuerung bzw. -regelung natürlich auch mit einer Modulatoreingangsgrößensteuerung bzw. -regelung, d. h. z. B. des Kupplungsstrom o. ä. gesteuert und geregelt werden. In diesem Falle müssen natürlich die spezifischen Zusammenhänge zwischen der Modulatoreingangsgröße, z. B. dem Kupplungsstrom, und der Modulatorausgangsgröße, z. B. dem Modulatorausgangsdruck berücksichtigt werden. Die erläuterte Lage- und Wegsteuerung bzw. -regelung des Modulatorkolbens zeichnet sich durch ihre regelungstechnische Einfachheit aus und besitzt den Vorteil, daß verschiedene an sich latent vorhandene Störgrößen, wie z. B. Reibungshysteresen oder Nichtlinearitäten der elektromagnetischen Kupplung des elektrischen Stellantriebs selbsttätig mit ausgeregelt werden.

**Patentansprüche**

1. Antiblockierregelsystem für hydraulische Kraftfahrzeug-Bremsanlagen, mit Sensoreinrichtungen (6) zur Erfassung von Betriebsparametern des Kraftfahrzeugs, insbesondere des Drehverhaltens zumindest der bremsschlupfregelbaren Fahrzeugräder (1), sowie mit einer elektronischen Steuer- und Regeleinrichtung (7), welche nach Auswertung der ihr zugeführten Ausgangssignale ($i_a$ bis $i'''_a$; $s_1$ bis $s_3$) der Sensoreinrichtungen (6) Steuer- und Regelsignale ($i_s$ bis $i''_s$) für stetig arbeitende Bremsdruckmodulatoren (5) erzeugt, durch welche der Hydraulikdruck (P) der Radbremszylinder von jeweils als blockiergefährdet erkannten bremsschlupfregelbaren Fahrzeugrädern (1) selbsttätig zunächst schnellstmöglich auf einen die Blockierneigung beseitigenden Wert abgesenkt und anschließend wieder erhöht wird, wobei im Rahmen der Antiblockierregelung u. a. an den bremsschlupfregelbaren Fahrzeugrädern (1) wirkende Bremsmomente, Bremskräfte oder Bremsdrücke - oder diesen zumindest stationär proportionale andere Betriebsparameter der Bremsanlage - erfaßt und in den Speichereinheiten der elektronischen Steuer- und Regeleinrichtung (7) gespeichert werden und wobei die Bremsdruckmodulatoren (5) von als blockiergefährdet erkannten Fahrzeugrädern (1) durch die elektronische Steuer- und Regeleinrichtung (7) nach erfolgter Hydraulikdruckabsenkung wieder so gesteuert bzw. geregelt werden, daß die an diesen Rädern (1) wirksamen Bremsmomente, Bremskräfte oder Bremsdrücke - bzw. die diesen zumindest stationär proportionalen anderen Betriebsparameter - zumindest annähernd den Wert der erfaßten und gespeicherten Werte annehmen, dadurch gekennzeichnet, daß die Bremsdruckmodulatoren (5) der als blockiergefährdet erkannten Fahrzeugräder (1) durch die elektronische Steuer- und Regeleinrichtung (7) jeweils zuerst in einer Anbrems- und Suchphase

    a) derart gesteuert bzw. geregelt werden, daß der Hydraulikdruck (Bremsdruck) zunächst schnellstmöglich, aber nur soweit absinkt, bis die Raddrehverzögerung (negative Raddrehbeschleunigung) wieder einen der Fahrzeugverzögerung entsprechenden Wert aufweist, daß der Hydraulikdruck anschließend solange zumindest annähernd diesen Wert beibehält, bis das zugeordnete Fahrzeugrad (1) auf eine Raddrehgeschwindigkeit ($v_1$) beschleunigt hat, die zumindest annähernd einer aus der Fahrzeugverzögerung ermittelten idealen Raddrehgeschwindigkeit (Raddrehgeschwindigkeits-Sollwert) ($v_s$) entspricht, und daß der Hydraulikdruck danach wieder soweit erhöht wird, bis dieses Fahrzeugrad (1) von der elektronischen Steuer- und Regeleinrichtung (7) erneut als blockiergefährdet erkannt ist, anschließend in einer Regelphase

    b) zunächst derart gesteuert bzw. geregelt werden, daß der Hydraulikdruck (Bremsdruck) des erneut als blockiergefährdet erkannten Fahrzeugrades (1) wiederum schnellstmöglich, aber nur soweit absinkt, bis die Raddrehverzögerung wieder einen der Fahrzeugverzögerung entsprechenden Wert aufweist, und daß der Hydraulikdruck anschließend solange zumindest annähernd diesen Wert beibehält, bis das zugeordnete Fahrzeugrad (1) auf eine Raddrehgeschwindigkeit ($v_1$) beschleunigt hat, die zumindest annähernd einer aus der Fahrzeugverzögerung ermittelten idealen Raddrehgeschwindigkeit (Raddrehgeschwindigkeits-Sollwert) ($v_s$) entspricht, und

    c) danach in einen Aussteuerungszustand überführt werden, welcher zumindest annähernd ihrem kurz vor dem Erkennen der erneuten Blockiergefährdung eingenommenen und in den Speichereinheiten der elektronischen Steuer- und Regeleinrichtung (7) abgespeicherten Aussteuerungszustand entspricht.

2. Antiblockierregelsystem nach Anspruch 1, dadurch gekennzeichnet, daß die Bremsdruckmodulatoren (5) der als blockiergefährdet erkannten Fahrzeugräder (1) in einer der Regelphase nachfolgenden Wiederbelastungsphase jeweils solange stetig und langsam im Sinne einer Erhöhung des im Radbremszylinder des jeweils zugeordneten Fahrzeugrades (1) wirksamen Hydraulikdrucks gesteuert bzw. geregelt werden, bis diese Räder (1) von der elektronischen Steuer- und Regeleinrichtung (7) erneut als blockiergefährdet erkannt sind.

3. Antiblockierregelsystem nach Anspruch 2, dadurch gekennzeichnet, daß die Erhöhung des Hydraulikdrucks während der Wiederbelastungsphase mit erheblich kleinerem Gradienten durchgeführt wird als während der Anbrems- und Suchphase.

4. Antiblockierregelsystem nach Anspruch 2, dadurch gekennzeichnet, daß die Erhöhung des Hydraulikdrucks während der Wiederbelastungsphase dann, wenn von der elektronischen Steuer- und Regeleinrichtung (7) eine spontane Abnahme der zuvor vorhandenen Drehzahlunruhe (Drehzahlschwankungen) festgestellt wird, mit vergrößertem, vorzugsweise ähnlich großem Gradienten wie während der Anbrems- und Suchphase durchgeführt wird.

5. Antiblockierregelsystem nach einem der Ansprüche 2 bis 4, dadurch gekennzeichnet, daß die Bremsdruckmodulatoren (5) unter ständiger Aktualisierung der in den Speichereinheiten der elektronischen Steuer- und Regeleinrichtung (7) gespeicherten Werte alternierend entsprechend der Regel- und der Wiederbelastungsphase gesteuert bzw. geregelt werden.

6. Antiblockierregelsystem nach einem der Ansprüche 1 bis 5, dadurch gekennzeichnet, daß die Fahrzeugbeschleunigung bzw. -verzögerung jeweils als Gradient einer aus dem - von den Sensoreinrichtungen (6) erfaßten - Drehverhalten der Fahrzeugräder (1) gebildeten tiefpaßgefilterten Maximaldrehzahlkurve ($v_x$) gewonnen wird.

7. Antiblockierregelsystem nach Anspruch 6, dadurch gekennzeichnet, daß die Blockiergefährdung der Fahrzeugräder jeweils aus einem Vergleich der erfaßten Raddrehgeschwindigkeit ($v_1$) mit einer Raddrehgeschwindigkeits-Vergleichsgeraden (Vergleichsrampe) ($v_{VA}$ bzw. $v_{VR}$) ermittelt wird, indem

a) zeitlich parallel zur Bildung der Maximaldrehzahlkurve ($v_x$) ständig der Gradient der Maximaldrehzahlkurve ($v_x$) und der Gradient der erfaßten Raddrehgeschwindigkeit ($v_1$) gebildet werden.

b) ein erster Zeitpunkt ($t_1$) erfaßt wird, zu dem der Gradient der erfaßten Raddrehgeschwindigkeit ($v_1$) einen fest vorgegebenen Wert überschreitet oder um einen fest vorgegebenen Wert größer wird als der Gradient der Maximaldrehzahlkurve ($v_x$),

c) eine zeitlich mit diesem Gradienten abnehmende, zum erfaßten ersten Zeitpunkt ($t_1$) der erfaßten Raddrehgeschwindigkeit ($v_1$) größenmäßig übereinstimmende Raddrehgeschwindigkeits-Vergleichsgerade ($v_{VA}$ bzw. $v_{VR}$) gebildet und fortan mit der erfaßten Raddrehgeschwindigkeit ($v_1$) des betreffenden Fahrzeugrades (1) verglichen wird, und

d) ein zweiter Zeitpunkt ($t_2$, $t^*_2$, $t^{**}_2$), zu dem die Differenz zwischen erfaßter Raddrehgeschwindigkeit ($v_1$) und Raddrehgeschwindigkeits-Vergleichsgerade ($v_{VA}$ bzw. $v_{VR}$) einen vorgegebenen ersten Schwellwert (Radaktivschwelle) ($\Delta v_1$) überschreitet, als Eintritt der Blockiergefährdung dieses Fahrzeugrades (1) erkannt wird.

8. Antiblockierregelsystem nach Anspruch 7, dadurch gekennzeichnet, daß während jedes Antiblockierregelzyklus' jeweils zur Ermittlung eines erstmals eintretenden zweiten Zeitpunktes ($t_2$) der Gradient der Raddrehgeschwindigkeits-Vergleichsgeraden (Vergleichsrampe) ($v_{VA}$) einen betriebsparameterunabhängigen festen Wert aufweist, vorzugsweise betragsmäßig etwa 1,2 g, während er zur Ermittlung nachfolgender weiterer zweiter Zeitpunkte ($t^*_2$, $t^{**}_2$) jeweils um einen festen Wert größer ist, vorzugsweise um betragsmäßig etwa 0,5 g, als der Gradient der Maximaldrehzahlkurve ($v_x$) zum unmittelbar vorangehenden erfaßten ersten Zeitpunkt ($t_1$).

9. Antiblockierregelsystem nach Anspruch 7 oder 8, dadurch gekennzeichnet, daß der für die Erfassung der zweiten Zeitpunkte ($t_2$), $t^*_2$, $t^{**}_2$) vorgegebene erste Schwellwert (Radaktivitätsschwelle) ($\Delta v_1$) für Vorder- sowie Hinterräder unterschiedlich groß und in Abhängigkeit von der Fahrgeschwindigkeit sowie z. B. von schlechtwegebedingten Änderungen von Betriebsparametern bemessen wird.

10. Antiblockierregelsystem nach einem der Ansprüche 7 bis 9, dadurch gekennzeichnet, daß während jedes Antiblockierregelzyklus' jeweils bis zur erstmaligen Erfassung eines zweiten Zeitpunkts ($t_2$) zur Bildung der tiefpaßgefilterten Maximaldrehzahlkurve ($v_x$) eine kleinere Tiefpaßfilter-Zeitkonstante verwendet wird als danach.

11. Antiblockierregelsystem nach einem der Ansprüche 7 bis 10, dadurch gekennzeichnet, daß mit jeder Erfassung eines zweiten Zeitpunkts ($t_2$, $t^*_2$, $t^{**}_2$) (Eintritt einer Blockiergefährdung) gleichzeitig eine Raddrehgeschwindigkeits-Idealkurve (Raddrehgeschwindigkeits-Sollwertkurve) ($v_S$) gebildet wird, welche zeitlich mit dem Gradienten der Maximaldrehzahlkurve ($v_x$) abnimmt und zu diesem zweiten Zeitpunkt ($t_2$, $t^*_2$, $t^{**}_2$) größenmäßig mit der Raddrehgeschwindigkeits-Vergleichsgeraden ($v_{VA}$ bzw. $v_{VR}$) übereinstimmt, und daß die erfaßte Raddrehgeschwindigkeit

($v_1$) fortan mit der zugeordneten idealen Raddrehgeschwindigkeit ($v_s$) verglichen wird.

12. Antiblockierregelsystem nach Anspruch 11, dadurch gekennzeichnet, daß durch Vergleich der erfaßten Raddrehgeschwindigkeit ($v_1$) mit der Raddrehgeschwindigkeits-Idealkurve($v_s$) der Zeitpunkt, zu dem die Differenz zwischen erfaßter Raddrehgeschwindigkeit ($v_1$) und zugeordneter idealer Raddrehgeschwindigkeit ($v_s$) einen vorgegebenen zweiten Schwellwert (Abweichungsschwelle) ($\Delta v_2$) unterschreitet, als ein vierter Zeitpunkt ($t_4$) erfaßt wird, von dem ab der betreffende Bremsdruckmodulator (5)

a) während der Anbrems- und Suchphase solange in Richtung einer Hydraulikdruckerhöhung ausgesteuert wird, bis das zugeordnete Fahrzeugrad (1) erneut als blockiergefährdet erkannt ist, und

b) während der Regelphase in einen Aussteuerungszustand überführt wird, der dem kurz vor dem vorangegangenen zweiten Zeitpunkt ($t^*_2$, $t^{**}_2$), d. h. kurz vor Blockierbeginn erfaßten und gespeicherten Aussteuerungszustand entspricht.

13. Antiblockierregelsystem nach einem der Ansprüche 2 bis 12, dadurch gekennzeichnet, daß die Bremsdruckmodulatoren (5) während der Wiederbelastungsphase jeweils durch eine Führungsgröße ($i_s$) gesteuert bzw. geregelt werden, welche eine Grundgröße und eine dieser aufintegrierte Zusatzgröße (DI) enthält, daß die Grundgröße dem am Ende der vorangegangenen Regelphase eingesteuerten Aussteuerungszustand der Bremsdruckmodulatoren (5) entspricht bzw. proportional ist, und daß die Zusatzgröße (DI) durch eine in den Speichereinheiten der elektronischen Steuer- und Regeleinrichtung (7) abgespeicherte nichtlineare Funktion der Differenz zwischen Fahrzeugbeschleunigung ($B_F$) und Raddrehbeschleunigung ($B_{RAD}$) bestimmt ist, wobei die Funktion ID = f ($B_F$ - $B_{RAD}$) eine geschlossene Kurve bildet, mit einem im wesentlichen negativen unteren Kennlinienast (B), der maßgeblich ist, wenn das bremsschlupfgeregelte Rad (1) mindestens mit der idealen Raddrehgeschwindigkeit ($v_s$) umläuft, und einem dazu beabstandeten, zum Teil positiven oberen Kennlinienast (A), der maßgeblich ist, wenn das bremsschlupfgeregelte Rad (1) mit einer geringeren als der idealen Raddrehgeschwindigkeit ($v_s$) umläuft.

14. Antiblockierregelsystem nach einem der Ansprüche 7 bis 12,

dadurch gekennzeichnet, daß die aufgrund der Erfassung eines zweiten Zeitpunkts ($t_2$, $t^*_2$, $t^{**}_2$) in Richtung einer Hydraulikdruckabsenkung geänderte Führungsgröße ($i_s$) zur Steuerung oder Regelung der Bremsdruckmodulatoren (5) stets dann, wenn die Raddrehbeschleunigung betragsmäßig größer wird als die vorangegangene Raddrehverzögerung, schnellstmöglich wieder auf den Wert zurückgestellt wird, den sie zum zweiten Zeitpunkt ($t_2$, $t^*_2$, $t^{**}_2$) besaß.

15. Antiblockierregelsystem nach Anspruch 14, dadurch gekennzeichnet, daß der erste Schwellwert (Radaktivitätsschwelle) ($\Delta v_1$) kurzzeitig stark vergrößert, vorzugsweise mindestens verdoppelt wird, sobald eine schnellstmögliche Rückstellung der Führungsgröße stattfindet.

16. Antiblockierregelsystem nach Anspruch 14 oder 15, dadurch gekennzeichnet, daß die Führungsgröße $i_s$ dann und solange, wie die Raddrehbeschleunigung betragsmäßig um einen vorgegebenen Wert größer ist als die Fahrzeugverzögerung, zusätzlich mit einem großen Gradienten in Richtung einer Hydraulikdruckerhöhung verändert wird.

17. Antiblockierregelsystem nach einem der Ansprüche 1 bis 16, dadurch gekennzeichnet, daß die Raddrehgeschwindigkeit sowie die Raddrehbeschleunigung bzw. -verzögerung in an sich bekannter Weise durch Messen eines vom Fahrzeugrad (1) zurückgelegten Weges während eines definierten zeitlichen Meßzyklus' erfaßt bzw. durch Differenzbildung zweier aufeinanderfolgend erfaßter Raddrehgeschwindigkeitswerte ermittelt wird, und daß der meßtechnisch bedingte zeitliche Phasenverzug der erfaßten bzw. ermittelten zu den tatsächlichen Werten der Raddrehgeschwindigkeit bzw. -beschleunigung/-verzögerung bei der Erzeugung der Führungsgrößen ($i_s$) zur Steuerung und Regelung der Bremsdruckmodulatoren (5) durch in der elektronischen Steuer- und Regeleinrichtung (7) vorgesehene Phasenkorrekturglieder zumindest weitgehend kompensiert wird.

18. Antiblockierregelsystem nach einem der Ansprüche 1 bis 17, dadurch gekennzeichnet, daß während der der Anbrems- und Suchphase folgenden Regelphase die Differenz der Hydraulikdrücke beider Vorderradbremsen begrenzt wird durch entsprechende Begrenzung der Differenz in der Aussteuerung der Bremsdruckmodulatoren (5) der beiden Vorderräder.

19. Antiblockierregelsystem nach einem der Ansprüche 1 bis 18,
mit als Bremsdruckreduzierzylinder ausgebildeten Bremsdruckmodulatoren, deren Modulatorkolben (Plunger 8) - zwecks Verstellung ihrer wirksamen Zylindervolumina und damit des Hydraulikdrucks in dem ihnen jeweils zugeordneten Teil der Bremsanlage - mittels elektrischer Stellantriebe (13, 14) zwischen zwei Endstellungen axial verschiebbar sind,
dadurch gekennzeichnet, daß jeweils die Lage bzw. der Weg (1) des Modulatorkolbens (8) als Maß für die Aussteuerung des Bremsdruckmodulators (5) erfaßt und in Speichereinheiten der elektronischen Steuer- und Regeleinrichtung (7) gespeichert wird.

**Claims**

1. An anti-skid control system for hydraulic motor vehicle braking systems having sensor devices (6) for detecting the operating parameters of motor vehicles, in particular the rotational behaviour at least of the motor vehicle wheels (1) which can be controlled with respect to slipping during the braking operation, as well as having an electronic control and regulating device (7), which, after evaluating the output signals ($i_a$ as far as $i'''_a$; $s_1$ as far as $s_3$) which it receives from the sensor devices (6), produces control and regulating signals ($i_s$ as far as $i''_s$) for continuously functioning braking pressure modulators (5), by means of which the hydraulic pressure (P) of the wheel brake cylinders of the motor vehicle wheels (1) which can be controlled with respect to slipping during the braking operation and which are recognised as being in danger of slipping, is first reduced automatically as quickly as possible to a value which removes the inclination to skid and which hydraulic pressure is subsequently increased again, wherein within the scope of the anti-skid control operation among other things braking moments, braking forces or braking pressures effective at the motor vehicle wheels (1), which can be controlled with respect to slipping during the braking operation, or other operating parameters of the braking system which are at least steady-state proportional thereto, are detected and stored in the storage units of the electronic control and regulating device (7) and wherein the braking pressure modulators (5) of the motor vehicles (1), which are recognised as being in danger of slipping, are controlled or regulated again by virtue of the electronic control and regulating device (7) after successfully reducing the hydraulic pressure, in such a way that the braking moments, braking forces and braking pressures effective at these wheels (1), or the other operating parameters which are at least steady-state proportional thereto, assume at least substantially the value of the detected and stored values, characterised in that the braking pressure modulators (5) of the motor vehicle wheels (1) which are recognised as being in danger of slipping are controlled or regulated by virtue of the electronic control and regulating device (7) in each case first in a commencement of the braking operation and search phase in such a way that:

a) the hydraulic pressure (braking pressure) first reduces as quickly as possible, but only until the amount of deceleration of the wheel rotation (negative acceleration of wheel rotation) corresponds again to the value of the motor vehicle deceleration, that the hydraulic pressure subsequently at least substantially maintains this value, until the associated motor vehicle wheel (1) has accelerated to a wheel rotating velocity ($v_1$), which velocity corresponds almost substantially to an ideal wheel rotating velocity, (set value for the wheel rotating velocity) ($v_s$), determined from the motor vehicle deceleration and that the hydraulic pressure is then increased again until this motor vehicle wheel (1) is recognised by the electronic control and regulating device (7) as being again in danger of slipping,
and subsequently in a control phase in such a way that:

b) the hydraulic pressure (braking pressure) of the motor vehicle wheel (1) which is recognised as being again in danger of slipping in turn reduces as quickly as possible but only until the amount of deceleration of the wheel rotation corresponds again to a value of the motor vehicle deceleration and that the hydraulic pressure subsequently almost substantially maintains this value until the associated motor vehicle wheel (1) has accelerated to a wheel rotating velocity ($v_1$), which corresponds at least substantially to an ideal wheel rotating velocity, (set value for the wheel rotating velocity) ($v_s$), determined from the motor vehicle deceleration, and

c) subsequently carried over into a control condition, which at least substantially corresponds to their control condition which is assumed shortly prior to recognising the repeated danger of slipping and which control condition is stored in the storage units of the electronic control and regulating device (7).

2. An anti-skid control system according to claim 1, characterised in that the braking pressure modulators (5) of the motor vehicle wheels (1) which are recognised as being in danger of slipping are controlled or regulated in a phase during which a further load is exerted and which phase follows on a control phase in each case continuously and slowly in the sense of increasing the hydraulic pressure effective in the wheel brake cylinder of the respective associated motor vehicle wheel (1), until these wheels (1) are recognised by the electronic control and regulating device (7) as being again in danger of slipping.

3. An anti-skid control system according to claim 2, characterised in that the hydraulic pressure is increased with a considerably smaller gradient during the phase during which a further load is exerted than during the commencement of braking operation and search phase.

4. An anti-skid control system according to claim 2, characterised in that the hydraulic pressure is increased during the phase, during which a further load is exerted, at a greater, preferably similar size gradient than during the commencement of braking operation and search phase, when the electronic control and regulating device (7) establishes a spontaneous reduction of the previously present disturbances in the rotational speed (fluctuations in the rotational speed).

5. An anti-skid control system according to one of the claims 2 to 4, characterised in that the braking pressure modulators (5) are controlled or regulated alternatingly corresponding to the control phase and the phase during which the further load is exerted, whilst continuously updating the values stored in the storage devices of the electronic control and regulating device (7).

6. An anti-skid control system according to one of claims 1 to 5, characterised in that the motor vehicle acceleration or deceleration is obtained in each case as a gradient of a low-pass filtered maximum rotational speed curve ($v_x$) formed from the rotational behaviour of the motor vehicle wheels (1) detected by the sensor devices (6).

7. An anti-skid control system according to claim 6, characterised in that the danger of the motor vehicle wheels slipping is determined in each case by comparing the detected wheel rotating velocity ($v_1$) with a wheel rotating velocity comparison line (comparison incline) ($v_{VA}$ or $v_{VR}$), in that

a) in parallel per unit time to the formation of the maximum rotational speed curve ($v_x$) the gradient of the maximum rotational speed curve ($v_x$) and the gradient of the detected wheel rotating velocity ($v_1$) are formed continuously.

b) a first point in time ($t_1$) is detected, at which the gradient of the detected wheel rotating velocity ($v_1$) exceeds a fixed predetermined value or is greater by a fixed predetermined value than the gradient of the maximum rotational speed curve ($v_x$).

c) a wheel rotating velocity comparison line ($V_{VA}$ or $V_{VR}$) is formed which reduces per unit time with this gradient and at the first detected point in time ($t_1$) corresponds in size to the detected wheel rotating velocity ($v_1$) and from this time onwards is compared with the detected wheel rotating velocity ($v_1$) of the relevant motor vehicle wheel (1) and,

d) a second point in time ($t_2$, $t^*_2$, $t^{**}_2$), at which point the difference between the detected wheel rotational velocity ($v_1$) and wheel rotational velocity comparison line ($v_{VA}$ or $v_{VR}$) exceeds a predetermined first threshold (threshold at which the wheel becomes active) ($\Delta v_1$) as it is recognised that this motor vehicle wheel (1) has started to be in danger of slipping.

8. An anti-skid control system according to claim 7, characterised in that during each anti-skid control operational cycle the gradient of the wheel rotating velocity comparison line (comparison incline) ($v_{VA}$) comprises in each case, for the purpose of determining the first time the second point in time ($t_2$) appears, a fixed value which is independent from the operating parameters, preferably amounting to approximately 1.2 g, whereas for the purpose of determining subsequent further second points in time ($t^*_2$, $t^{**}_2$) it is larger in each case by a fixed value, preferably by an amount of approximately 0.5 g, than the gradient of the maximum rotational speed curve ($v_x$) at the immediately preceding detected first point in time ($t_1$).

9. An anti-skid control system according to claim 7 or 8, characterised in that the first threshold value (threshold at which the wheel becomes active) ($\Delta v_1$), which is predetermined for detecting the second points in time ($t_2$, $t^*_2$, $t^{**}_2$) is different in size for the front and the rear wheels and is measured in dependence upon the driving velocity as well as for example on changes in the operating parameters caused by a poor road surface.

10. An anti-skid control system according to one of claims 7 to 9, characterised in that during each anti-skid control operational cycle, a low-pass filter time constant is used to form the low-pass filtered maximum rotational speed curve ($v_x$) which constant is smaller up until a second point in time ($t_2$) is detected for the first time than afterwards.

11. An anti-skid control system according to one of claims 7 to 10, characterised in that each time a second point in time ($t_2$, $t^*_2$, $t^{**}_2$) (commencement of a danger of the wheels slipping) is detected, an ideal wheel rotating velocity curve (set value wheel rotating velocity curve) ($v_s$) is formed simultaneously, which curve reduces per unit time with the gradient of the maximum rotational speed curve ($v_x$) and at this second point in time ($t_2$, $t^*_2$, $t^{**}_2$) corresponds in size with the wheel rotating velocity comparison line ($v_{VA}$ or $v_{VR}$), and that the detected wheel rotating velocity ($v_1$) from this point in time onwards is compared with the associated ideal rotating wheel velocity ($v_s$).

12. An anti-skid control system according to claim 11, characterised in that by comparing the detected wheel rotating velocity ($v_1$) with the ideal wheel rotating velocity curve ($v_s$) the point in time, at which the difference between the detected wheel rotating velocity ($v_1$) and the associated ideal wheel rotating velocity ($v_s$) does not achieve a predetermined second threshold value (deviation threshold) ($\Delta v_2$), is detected as a fourth point in time ($t_4$), from which point onwards the relevant braking pressure modulator (5)

    a) is controlled during the commencement of the braking operation and search phase in the direction whereby the hydraulic pressure is increased until it is recognised that the associated motor vehicle wheel (1) is again in danger of slipping, and

    b) is carried over during the control phase into a control condition, which corresponds to the control condition which is detected and stored immediately prior to the preceding second point in time ($t^*_2$, $t^{**}_2$), i.e. immediately prior to the commencement of slip.

13. An anti-skid control system according to one of claims 2 to 12, characterised in that the braking pressure modulators (5) are controlled or regulated during the phase during which a further load is exerted in each case by virtue of a guide variable ($i_s$), which contains a basic variable and an additional variable (DI) which is integrated therewith, that the basic variable corresponds to or is proportional to the control condition of the braking pressure modulators (5) initiated at the end of the preceding control phase, and that the additional variable (DI) is determined by virtue of a non-linear function of the difference between the motor vehicle acceleration ($B_F$) and the acceleration of the wheel rotation ($B_{RAD}$), which function is stored in the storage devices of the electronic control and regulating device (7), wherein the function ID = f ($B_f$ - $B_{RAD}$) forms a closed curve, having a substantially negative lower characteristic curve branch (B), which is decisive when the wheel (1), which is controlled with respect to slipping during the braking operation, rotates at least at the ideal wheel rotating velocity ($v_s$) and having a partially positive upper characteristic curve branch (A) which is at a distance thereto, which is decisive when the wheel (1), which is controlled with respect to slipping during the braking operation, rotates at a lower than ideal wheel rotating velocity ($v_s$).

14. An anti-skid control system according to one of claims 7 to 12, characterised in that for the purpose of controlling or regulating the braking pressure modulators (5) the guide variable ($i_s$), which owing to the second point in time ($t_2$, $t^*_2$, $t^{**}_2$) being detected changes in the direction whereby the hydraulic pressure is reduced is continuously returned as quickly as possible to the value which it possessed at the second point in time ($t_2$, $t^*_2$, $t^{**}_2$), when the amount of acceleration of wheel rotation is greater than the amount of acceleration of wheel rotation is greater than the preceding value of deceleration of wheel rotation.

15. An anti-skid control system according to claim 14, characterised in that the first threshold value (threshold at which the wheel becomes active) ($\Delta v_1$) is temporarily greatly increased, preferably at least doubled, as soon as the guide variable is reset as quickly as possible.

16. An anti-skid control System according to claim 14 or 15, characterised in that the guide variable ($i_s$) is changed additionally with a large gradient in the direction whereby the hydraulic pressure is increased when and for as long as the wheel rotating acceleration is greater by a predetermined value than the motor vehicle deceleration.

17. An anti-skid control system according to one of claims 1 to 16, characterised in that the wheel rotating velocity as well as the wheel rotating acceleration or deceleration is detected in a manner known per se by measuring a distance covered by the motor vehicle (1) during a definitive per unit time in the measuring cycle or by subtracting two sequentially detected wheel rotating velocity values, and that the phase delay per unit time, caused by the measuring technology, of the detected or determined values with respect to the actual values of the wheel rotating velocity or acceleration/deceleration is at least substantially compensated by virtue of the phase correcting members provided in the electronic control regulating device (7) when producing the guide variables ($i_s$) for controlling and regulating the braking pressure modulators (5).

18. An anti-skid control system according to one of claims 1 to 17, characterised in that during the control phase following the commencement of the braking operation and search phase, the difference of the hydraulic pressures of both front wheel brakes is limited by virtue of correspondingly limiting the difference in the control of the braking pressure modulators (5) of the two front wheels.

19. An anti-skid control system according to one of the claims 1 to 18, having braking pressure modulators in the form of braking pressure reducing cylinders, the modulator pistons (plunger 8) of which are axially displaceable between two end positions by means of electrical adjusting drives (13, 14) for the purpose of adjusting their effective cylinder volumina and consequently the hydraulic pressure in each case in the associated part of the braking system, characterised in that in each case the position or the travel (1) of the modulator piston (8) is detected as a measurement for controlling the braking pressure modulator (5) and stored in a storage unit of the electronic control and regulating device (7).

**Revendications**

1. Système de réglage anti-blocage d'installations hydrauliques de freinage de véhicules à moteur, comprenant des dispositifs capteurs (6) de détection de paramètres de fonctionnement du véhicule, en particulier de la façon de tourner d'au moins les roues (1) du véhicule dont le patinage de freinage est réglable, ainsi qu'un dispositif électronique (7) de commande et de réglage qui, après analyse des signaux de sortie ($i_a$ à $i'''_a$ ; $s_1$ à $s_3$) des dispositifs capteurs (6) qui lui sont envoyés, génère des signaux de commande et de réglage ($i_s$ à $i''_s$) de modulateurs (5) de la pression de freinage à action continue, signaux à l'aide desquels la pression hydraulique (P) des cylindres de freinage de celles des roues (1) du véhicule, dont le patinage de freinage est réglable et dont il a été décelé qu'elles risquent de se bloquer, est tout d'abord réduite automatiquement le plus rapidement possible à une valeur éliminant la tendance au blocage, puis subit ensuite à nouveau une élévation, les couples de freinage, les forces de freinage ou les pressions de freinage - ou d'autres paramètres de fonctionnement de l'installation de freinage proportionnels à ceux-ci au moins en régime permanent - agissant notamment sur les roues (1) du véhicule, dont le patinage de freinage est réglable, étant détectés dans le cadre de la régulation anti-blocage et étant mémorisés dans les modules de mémoires du dispositif électronique de commande et de réglage (7) et les modulateurs (5) de la pression de freinage de roues (1) du véhicule, dont il a été décelé qu'elles risquent de se bloquer, étant à nouveau commandés ou réglés par le dispositif électronique (7) de commande et de réglage à la suite de l'abaissement de la pression hydraulique de manière que les couples de freinage, les forces de freinage ou les pressions de freinage agissant sur ces roues (1) - ou d'autres paramètres de fonctionnement proportionnels à ceux-ci au moins en régime permanent - prennent au moins approximativement la valeur des grandeurs détectées et mémorisées, caractérisé en ce que tout d'abord, dans une phase de début de freinage et de recherche, le dispositif électronique (7) de commande et réglage agit sur les modulateurs (5) de la pression de freinage des roues (1) du véhicule, dont il a été décelé qu'elles risquent de se bloquer,

    a) de manière à les commander ou à les régler de façon que la pression hydraulique (pression de freinage) chute tout d'abord le plus rapidement possible, mais seulement jusqu'à ce que la décélération de la rotation de la roue (l'accélération négative de la rotation de la roue) ait à nouveau une valeur correspondant à la décélération du véhicule, de façon que la pression hydraulique conserve ensuite au moins approximativement cette valeur jusqu'à ce que la roue correspondante (1) du véhicule ait accéléré à une vitesse ($v_1$) de rotation qui correspond au moins approximativement à une vitesse idéale de rotation (à une vitesse de rotation de consigne de la roue) ($v_s$) déterminée d'après la décélération du véhicule et de manière que la pression hydraulique subisse ensuite une nouvelle élévation jusqu'à ce que le dispositif électronique de commande et de réglage (7) décèle à nouveau que cette roue (1) du véhicule risque de se bloquer,

ensuite, au cours d'une phase de réglage

b) de manière tout d'abord à les commander ou à les régler de façon que la pression hydraulique (pression de freinage) de la roue (1) du véhicule, dont il a été à nouveau décelé qu'elle risque de se bloquer, chute à nouveau le plus rapidement possible, mais seulement jusqu'à ce que la décélération de la rotation de la roue ait à nouveau une valeur correspondant à la décélération du véhicule et de façon que la pression hydraulique conserve au moins approximativement cette valeur jusqu'à ce que la roue correspondante (1) du véhicule ait accéléré à une vitesse de rotation ($v_1$) qui correspond au moins approximativement à une vitesse idéale de rotation (à une vitesse de rotation de consigne de la roue) ($v_s$) déterminée d'après la décélération du véhicule et

c) de façon qu'ensuite ils soient mis à un état de réglage qui correspond au moins approximativement à leur état de réglage qu'ils avaient peu avant que le risque de blocage soit à nouveau décelé et qui est mémorisé dans les modules de mémoires du dispositif électronique de commande et de réglage (7).

2. Système de réglage anti-blocage selon la revendication 1, caractérisé en ce que les modulateurs (5) de la pression de freinage des roues (1) du véhicule, dont il a été décelé qu'elles risquent de se bloquer, sont commandés ou réglés en continu et lentement au cours d'une phase de remise sous charge qui fait suite à la phase de réglage dans le sens d'une élévation de la pression hydraulique agissant dans le cylindre de freinage de la roue particulière correspondante (1) du véhicule jusqu'à ce que le système électronique de commande et de réglage (7) décèle à nouveau que ces roues (1) risquent de se bloquer.

3. Système de réglage anti-blocage selon la revendication 2, caractérisé en ce que l'élévation de la pression hydraulique est effectuée pendant la phase de remise sous charge avec un gradient notamment plus petit que pendant la phase de début de freinage et de recherche.

4. Système de réglage anti-blocage selon la revendication 2, caractérisé en ce que l'élévation de la pression hydraulique pendant la phase de remise sous charge est effectuée avec un gradient accru, de préférence ayant la même valeur que pendant la phase de début de freinage et de recherche lorsque le dispositif électronique de commande et de réglage (7) décèle une diminution spontanée de l'irrégularité existant précédemment de la vitesse de rotation (des fluctuations de la vitesse de rotation).

5. Système de réglage anti-blocage selon l'une des revendications 2 à 4, caractérisé en ce que les modulateurs (5) de la pression de freinage sont commandés ou réglés en alternance selon la phase de réglage et selon la phase de remise sous charge avec actualisation permanente des grandeurs mémorisées dans les modules de mémoires du dispositif électronique de commande et de réglage (7).

6. Système de réglage anti-blocage selon l'une des revendications 1 à 5, caractérisé en ce que l'accélération ou la décélération du véhicule est obtenue sous forme de gradient d'une courbe de vitesse maximale de rotation ($v_x$) ayant subi un filtrage par un filtre passe-bas et formée par la façon de tourner - détectée par les dispositifs capteurs (6) - des roues (1) du véhicule.

7. Système de réglage anti-blocage selon la revendication 6, caractérisé en ce que le risque de blocage des roues du véhicule est déterminé par une comparaison de la vitesse de rotation détectée de la roue ($v_1$) à une droite de comparaison (rampe de comparaison) de la vitesse de rotation de la roue ($v_{VA}$ ainsi que $v_{VR}$) par

a) formation permanente, en parallèle dans le temps avec la formation de la courbe de vitesse maximale de rotation ($v_x$), du gradient de la courbe de vitesse maximale de rotation ($v_x$) et du gradient de la vitesse détectée de rotation de la roue ($v_1$),

b) détection d'un premier instant ($t_1$) auquel le gradient de la vitesse détectée de rotation de la roue ($v_1$) dépasse une valeur fixe prescrite ou devient plus grand d'une valeur fixe prescrite que le gradient de la courbe de vitesse maximale de rotation ($v_x$),

c) formation d'une droite de comparaison de vitesse de rotation de la roue ($v_{VA}$ ainsi que $v_{VR}$) décroissant dans le temps suivant ce gradient et dont les grandeurs coïncident avec le premier instant détecté ($t_1$) de la vitesse détectée de rotation de la roue ($v_1$), puis par comparaison de cette droite à la vitesse détectée de rotation ($v_1$) de la roue (1) correspondante du véhicule et

d) par le fait qu'un second instant ($t_2$, $t^*_2$, $t^{**}_2$), auquel la différence entre la vitesse détectée de rotation de la roue ($v_1$) et la droite de comparaison de vitesse de rotation de la roue ($v_{VA}$ ou $v_{VR}$) dépasse un premier seuil prescrit (seuil d'activité de la roue)($\Delta v_1$),est considéré comme début du risque de blocage de cette roue (1) du véhicule.

8. Système de réglage anti-blocage selon la revendication 7, caractérisé en ce que, pendant chaque cycle de réglage anti-blocage, le gradient de la droite de comparaison de vitesse de rotation de la roue (rampe de comparaison)($v_{VA}$) a une valeur fixe, dont la grandeur est de préférence 1,2 g, qui est indépendante des paramètres de fonctionnement, pour la détermination d'un second instant ($t_2$) apparaissant pour la première fois, tandis que pour la détermination d'autres seconds instants ultérieurs ($t^*_2$, $t^{**}_2$), ce gradient est plus grand d'une valeur fixe, de préférence d'une grandeur d'environ 0,5 g, que le gradient de la courbe de vitesse maximale de rotation ($v_x$) au premier instant ($t_1$) qui a été détecté immédiatement avant.

9. Système de réglage anti-blocage selon la revendication 7 ou 8, caractérisé en ce que le premier seuil (seuil d'activité de la roue)($\Delta v_1$) prescrit pour la détection des seconds instants ($t_2$, $t^*_2$, $t^{**}_2$) a une valeur différente pour les roues avant et pour les roues arrière et il est calculé en fonction de la vitesse de marche ainsi que par exemple de variations de paramètres de fonctionnement qui sont dues à une mauvaise route.

10. Système de réglage anti-blocage selon l'une des revendications 7 à 9, caractérisé en ce que pendant chaque cycle de réglage anti-blocage, la constante de temps utilisée pour le filtre passe-bas jusqu'à la première détection d'un second instant ($t_2$) pour la formation de la courbe de vitesse maximale de rotation ($v_x$) filtrée par un filtre passe-bas est plus petite que par la suite.

11. Système de réglage anti-blocage selon l'une des revendications 7 à 10, caractérisé en ce qu'à chaque détection d'un second instant ($t_2$, $t^*_2$, $t^{**}_2$)(début d'un risque de blocage), une courbe idéale de vitesse de rotation de la roue (courbe de consigne de la vitesse de rotation de la roue)($v_S$) est formée simultanément, décroît dans le temps suivant le gradient de la courbe de la vitesse maximale de rotation ($v_x$) et coïncide en dimension à ce second instant ($t_2$, $t^*_2$, $t^{**}_2$) avec la droite de comparaison de vitesse de rotation de la roue ($v_{VA}$ ainsi que $v_{VR}$) et en ce que la vitesse détectée de rotation de la roue ($v_1$) est comparée ensuite à la vitesse idéale correspondante de rotation de la roue ($v_s$).

12. Système de réglage anti-blocage selon la revendication 11, caractérisé en ce que l'instant auquel la différence entre la vitesse détectée de rotation de la roue ($v_1$) et la vitesse idéale correspondante de rotation de la roue ($v_s$) passe sous un second seuil prescrit (seuil de divergence) ($\Delta v_2$) par comparaison de la vitesse détectée de rotation de la roue ($v_1$) à la courbe idéale ($v_s$) de la vitesse de rotation de la courbe est détecté et représente un quatrième instant ($t_4$) à partir duquel le modulateur correspondant (5) de pression de freinage

a) est réglé pendant la phase de début de freinage et de recherche dans le sens d'une élévation de la pression hydraulique jusqu'à ce que la roue concernée (1) du véhicule soit à nouveau détectée comme risquant de se bloquer et

b) il est mis pendant la phase de réglage à un état de réglage qui correspond à l'état de réglage détecté et mémorisé peu avant le second instant précédent ($t^*_2$, $t^{**}_2$), c'est-à-dire peu avant le début du blocage.

13. Système de réglage anti-blocage selon l'une des revendications 2 à 12, caractérisé en ce que, pendant la phase de remise sous charge, chacun des modulateurs (5) de la pression de freinage est commandé et réglé par une grandeur pilote ($i_s$) qui comprend une grandeur de base et une grandeur auxiliaire (DI) incorporée à celle-ci par intégration,

en ce que la grandeur de base correspond ou est proportionnelle à l'état de réglage des modulateurs (5) de pression de freinage qui a été établi à la fin de la phase précédente de réglage

et en ce que la grandeur auxiliaire (DI) est déterminée par une fonction non linéaire de la différence entre l'accélération du véhicule ($B_F$) et l'accélération de rotation de la roue ($B_{RAD}$)

qui a été enregistrée dans les modules de mémoires du dispositif électronique de commande et de réglage (7),

la fonction ID = f ($B_F$ - $B_{RAD}$) formant une courbe fermée comprenant un segment inférieur, sensiblement négatif, de ligne caractéristique (B) qui est déterminant lorsque la roue (1), dont le patinage de freinage est réglé, tourne au moins à la vitesse idéale ($v_s$), ainsi qu'un segment supérieur, partiellement positif, de ligne caractéristique (A) qui est à distance du précédent et qui est déterminant lorsque la roue (1), dont le patinage de freinage est réglé, tourne à une vitesse inférieure à la vitesse idéale ($v_s$).

14. Système de réglage anti-blocage selon l'une des revendications 7 à 12, caractérisé en ce que la grandeur pilote ($i_s$) modifiée dans le sens d'un abaissement de la pression hydraulique sur la base de la détection d'un second instant ($t_2$, $t^*_2$, $t^{**}_2$) pour la commande ou le réglage des modulateurs (5) de la pression de freinage est toujours remise le plus rapidement possible à la valeur qu'elle avait au second instant ($t_2$, $t^*_2$, $t^{**}_2$) lorsque l'importance de l'accélération de la rotation de la roue est supérieure à celle de la décélération précédente de la rotation de la roue.

15. Système de réglage anti-blocage selon la revendication 14, caractérisé en ce que le premier seuil (seuil d'activité de la roue)($\Delta v_1$) subit brièvement un fort accroissement, de préférence au moins un doublement, dès qu'a lieu une remise la plus rapide possible de la grandeur pilote à la valeur initiale.

16. Système de réglage anti-blocage selon la revendication 14 ou 15, caractérisé en ce que la grandeur pilote $i_s$ est accessoirement modifiée par un fort gradient dans le sens d'une élévation de la pression hydraulique lorsque, et aussi longtemps que, l'importance de l'accélération de la rotation de la roue est plus grande d'une valeur prescrite que la décélération du véhicule.

17. Système de réglage anti-blocage selon l'une des revendications 1 à 16, caractérisé en ce que la vitesse de rotation de la roue ainsi que l'accélération ou la décélération de la rotation de la roue sont déterminées de manière connue en soi par mesure d'une course parcourue par la roue (1) du véhicule pendant un cycle de mesure défini dans le temps ou par formation de la différence de deux vitesses de rotation de la roue détectées successivement et en ce que le déphasage dans le temps, dû à la technique de mesure, des valeurs détectées ou déterminées par rapport aux valeurs réelles de la vitesse ou de l'accélération/décélération de la rotation de la roue lors de la génération des grandeurs pilote ($i_s$) pour la commande et le réglage des modulateurs (5) de la pression de freinage est au moins pratiquement compensé par des éléments de correction de phase prévus dans le dispositif électronique de commande et de réglage (7).

18. Système de réglage anti-blocage selon l'une des revendications 1 à 17, caractérisé en ce que, pendant la phase de réglage qui suit la phase de début de freinage et de recherche, la différence des pressions hydrauliques des deux freins des roues avant est limitée par une limitation correspondante de la différence du réglage des modulateurs (5) de la pression de freinage des deux roues avant.

19. Système de réglage anti-blocage selon l'une des revendications 1 à 18, comprenant des modulateurs de la pression de freinage constitués de cylindres de réduction de la pression de freinage et dont les pistons (plongeurs 8) sont déplaçables axialement entre deux positions extrêmes au moyen de servo-commandes électriques (13, 14) - dans le but du réglage du volume efficace de leurs cylindres et donc de la pression hydraulique dans la partie de l'installation de freinage qui leur est affectée -

caractérisé en ce que la position ou la course (1) du piston (8) de chaque modulateur est détectée pour servir de mesure du réglage du modulateur (5) de la pression de freinage et est enregistrée dans les modules de mémoires du dispositif électronique de commande et de réglage (7).

FIG 1

FIG 2

FIG 3a

FIG 3b

FIG 3c

FIG 4a

FIG 4b

FIG 4c

*FIG 5*

EP 0 443 066 B1